(19) Europäisches Patentamt
European Patent Office
Office européen des brevets

(11) **EP 1 350 941 B1**

(12) **EUROPEAN PATENT SPECIFICATION**

(45) Date of publication and mention
of the grant of the patent:
**01.12.2004 Bulletin 2004/49**

(51) Int Cl.⁷: **F02D 41/24**, F02D 41/34,
F02D 41/40

(21) Application number: **03007177.3**

(22) Date of filing: **28.03.2003**

(54) **Fuel injection control device and fuel injection control method**

System und Verfahren zur Steuerung der Kraftstoffeinspritzung

Système et méthode de commande d'injection de carburant

(84) Designated Contracting States:
**DE ES FR GB IT**

(30) Priority: **29.03.2002 JP 2002095589**
**25.07.2002 JP 2002216726**
**24.03.2003 JP 2003079411**

(43) Date of publication of application:
**08.10.2003 Bulletin 2003/41**

(73) Proprietors:
• **TOYOTA JIDOSHA KABUSHIKI KAISHA**
**Toyota-shi, Aichi-ken 471-8571 (JP)**
Designated Contracting States:
**DE ES GB IT FR**
• **Denso Corporation**
**Kariya-city, Aichi-ken 448-8661 (JP)**
Designated Contracting States:
**DE**

(72) Inventors:
• **Fukuma, Takao**
**Toyota-shi, Aichi-ken, 471-8571 (JP)**
• **Iwai, Takeshi**
**Kariya-city, Aichi-ken, 448-8661 (JP)**
• **Narahara, Yoshihiro**
**Kariya-city, Aichi-ken, 448-8661 (JP)**
• **Takemoto, Eiji**
**Kariya-city, Aichi-ken, 448-8661 (JP)**

(74) Representative:
**Leson, Thomas Johannes Alois, Dipl.-Ing.**
**Patentanwälte**
**Tiedtke-Bühling-Kinne & Partner,**
**Bavariaring 4**
**80336 München (DE)**

(56) References cited:
**EP-A- 0 860 600**          **US-A- 4 790 277**
**US-A- 5 000 042**          **US-A- 5 706 780**

**Description**

**BACKGROUND OF THE INVENTION**

1. Field of the Invention

The invention relates to a fuel injection device for an internal combustion engine and, more particularly, to the enhancement of regulating precision for fuel injection of a fuel injection device having fuel injection valves that actually start fuel injection with a delay from the start of fuel injection control.

2. Description of the Related Art

Pilot injection is known as one of general fuel injection technologies for diesel engines. This is a fuel injection technology wherein part of fuel to be injected by main injection is injected into combustion chambers in advance, wherein a heat source serving as pilot flames for main combustion is created in the combustion chambers, wherein an abrupt rise in combustion pressure or an abrupt rise in combustion temperature during main combustion is thereby suppressed, and wherein reduction of combustion noise, suppression of generation of nitrogen oxides (NOx), and the like are achieved.

In recent years, since "multiple injection technologies" typified by this pilot injection have been adopted, it has been required to more accurately grasp the operating characteristics of fuel injection valves. It is to be noted herein that "the multiple injection technologies" refer to fuel injection control in which fuel injection is carried out a plurality of times in a single combustion cycle. In addition to the above-mentioned pilot injection, post injection in which fuel is injected into cylinders in the late stage of a combustion stroke is generally known as one of "the multiple injection technologies".

In the foregoing description, "the operating characteristics of the fuel injection valves" refer to a delay in injection which is unavoidable due to the mechanical structure of the fuel injection valves. Electromagnetically driven fuel injection valves will now be taken as an example to explain how they are correlated to fuel injection control. It is reasonable to state that a period that is required until fuel injection is actually started after the start of energization following the start of fuel injection control, namely, a minimum drive period for the fuel injection valves is determined by the operating characteristics of the fuel injection valves.

The operating characteristics of the fuel injection valves, which are correlated to the above-mentioned minimum drive period for the fuel injection valves, greatly change depending on manufacturing tolerances thereof, aging of valve bodies, or the like. Thus, in some cases, fuel injection is carried out in a form different from normal fuel injection control.

In particular, the above-mentioned multiple injection technologies are designed such that a negligible amount of fuel is injected into cylinders through energization in the vicinity of the minimum drive period. Thus, if an actual minimum drive period is longer than the minimum drive period that has been predicted, a phenomenon in which fuel is not injected although fuel injection valves have been controlled for a normal energization period may occur.

Thus, according to one related art, a minimum drive period that is required until fuel injection from fuel injection valves is actually started is calculated, and fuel injection control is corrected in accordance with a deviation from a minimum drive period that is determined in terms of fuel injection control. An art for calculating a minimum drive period is disclosed, for example, in Japanese Patent Application Laid-Open No. 11-294227.

According to the invention disclosed in this publication, after energization of electromagnetically driven fuel injection valves has been started in response to the start of fuel injection control, an HC sensor continues to detect a concentration (HC concentration) of hydrocarbons contained in exhaust gas. This concentration changes as a result of fuel that is injected from the fuel injection valves. A minimum drive period for the fuel injection valves is determined on the basis of timings corresponding to changes in output value of the HC sensor.

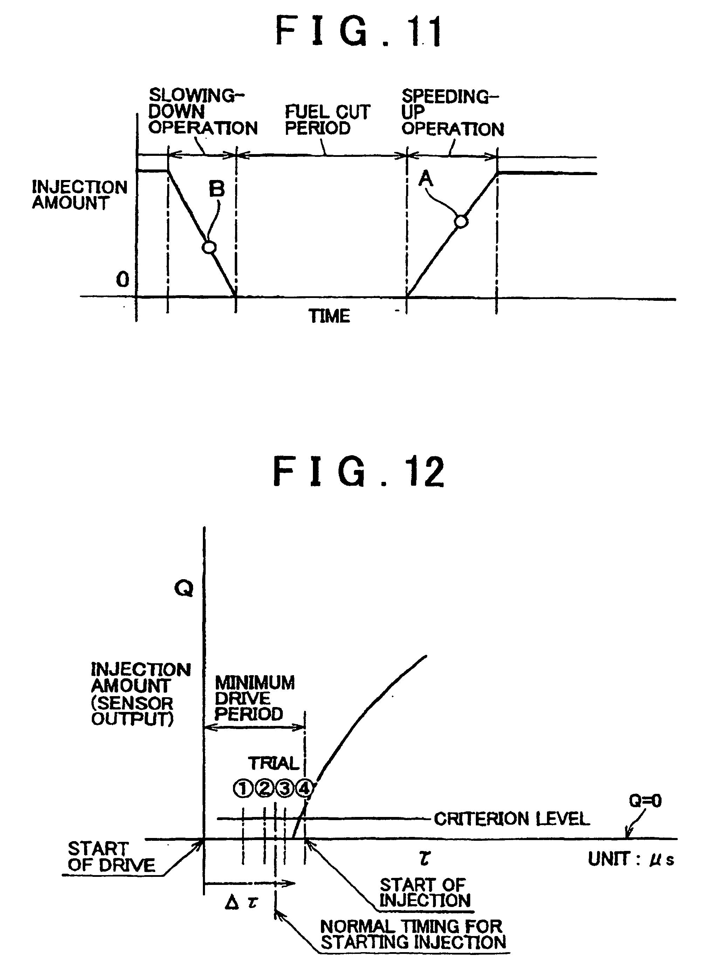

More specifically, as is apparent from a $\tau$-Q characteristic diagram ($\tau$: energization period, Q: injection amount (sensor output value)) shown in Fig. 12, a sensor output value at the time when no fuel is injected is first of all set as a threshold (Q=0) for the minimum drive period. Fuel injection control that lasts for an energization period $\Delta\tau$ in which fuel injection is started is performed a plurality of times in the vicinity of a normal timing for starting fuel injection. The energization period $\Delta\tau$ for fuel injection control in which a change in output value of the HC sensor is equal to or larger than a predetermined value (hereinafter referred to as a criterion level) is regarded as a minimum drive period for the fuel injection valves.

In Fig. 12, a change in sensor output value is equal to or larger than the criterion level in a fourth trial (4). Thus, the energization period $\Delta\tau$ in the fourth trial (4) corresponds to the minimum drive period for the fuel injection valves. That is, if the energization period $\Delta\tau$ is shorter than an injection delay period that is inherent in the fuel injection valves, fuel injection is not carried out. If the energization period $\Delta\tau$ is longer than the injection delay period, fuel injection is detected in the form of a change in output value from the HC sensor. A minimum drive period for the fuel injection valves is grasped as the energization period $\Delta\tau$ at that moment.

If solenoid-operated actuators are employed as means for opening and closing injectors, the drive period for the fuel injection valves is a period in which the solenoids are energized. The injectors demonstrate injection characteristics in which injection amount increases in accordance with an increase in drive period, but do not necessarily demonstrate linear characteristics. Because there is a time lag from the start of driving to the actual start of injection as a result of a responsive delay of mechanisms inside the injectors or the like, there is a non-injection period in which no fuel is actually injected in a range where the drive period is relatively short.

Japanese Patent Application Laid-Open No. 2001-90580 discloses an art in which learning-purpose injection for learning injection characteristics of the injectors is carried out when fuel injection for obtaining power is not carried out. In this art, for each of cylinders, the drive period is gradually increased at a predetermined pitch from a fairly short drive period in which fuel is not reliably injected. Every time the drive period is increased, it is determined whether or not a sensor output value is larger than a value at the time when no fuel is injected. Thus, the magnitude of fluctuations or deviations in a minimum drive (energization) period prior to the actual start of injection is found, and the drive period for each of the injectors is corrected on the basis of the magnitude thus found. In this manner, the enhancement of regulating precision of fuel injection is accomplished.

However, dedicated studies conducted by the inventors have revealed that various problems are caused in calculating the above-mentioned minimum drive period.

First of all, according to the related art, fuel injection control with different energization periods $\Delta\tau$ needs to be repeatedly performed numerous times until a change in output value of the HC sensor is obtained, and a relatively long period is required in detecting fuel injection that is required in calculating a minimum drive period. Hence, in an internal combustion engine (e.g., an internal combustion engine for vehicles) whose operational circumstances change from one moment to another, it is difficult to ensure a period required for calculation of the minimum drive period. In terms of practical application, there are still many problems.

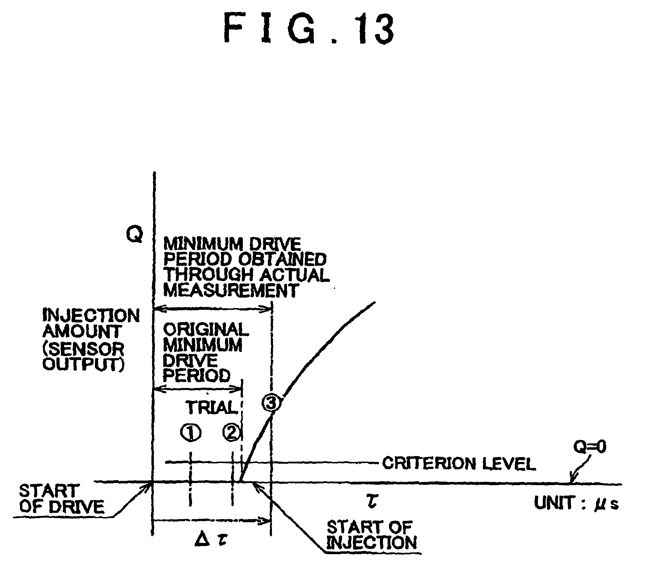

Although the problem concerning a measuring period can be solved by setting the amplitude (pitch) of an energization period $\Delta T$ as a large value, there is also an apprehension that a deterioration in detecting precision may be caused. That is, as shown in Fig. 13. a change in output value from the HC sensor can be obtained with the number of trials being small (e.g., the trial (3)). However, since the energization period $\Delta\tau$ that sharply deviates from an inherent minimum drive period is regarded as the minimum drive period, a substantial deterioration in detecting precision may sometimes be caused.

Furthermore, when fuel injection is started, the amount of fuel injection is small as a matter of course, and the change in output value from the HC sensor is negligible as well. Thus, a criterion level needs to be set for output values of the HC sensor as described above. Even if it is assumed that there is no disturbance in reading outputs value from the HC sensor, the existence of the criterion level causes a deterioration in detecting precision. The influence of disturbances such as noise during detection and an error in detection of the HC sensor itself is also grave. In this respect as well, it is difficult to accurately grasp a minimum drive period.

Because calculation of a minimum drive period still bears many problems as described above, it is impossible to conclude with certainty that correction processings of fuel injection control based on a minimum drive period calculated by a method of the related art are precise.

In the art disclosed in the above-mentioned Japanese Patent Application Laid-Open No. 2001-90580, resolving power in measuring a drive period for starting injection depends on the pitch of drive period. If this pitch is reduced, resolving power is increased. However, if the pitch of drive period is reduced, the sensor output value does not increase to such an extent that it is possible to determine whether or not the drive period for starting injection has been exceeded. Therefore, the influence of noise relatively increases. For this reason, it is difficult to know the injection characteristics of injectors with sufficient precision. If the pitch of drive period is reduced, a problem such as an increase in learning period is caused as well. The patent application US-6102000 discloses a fuel injection control device capable of optimising the fuel injection control based on variations in fuel characteristics like fuel viscosity.

## SUMMARY OF THE INVENTION

The invention has been made in consideration of the above-mentioned technical background. It is an object of the invention to provide a fuel injection device for an internal combustion engine with an art for precisely detecting a minimum drive period for fuel injection valves within a short period and an art for precisely correcting fuel injection control in accordance with a minimum drive period that has been detected.

A fuel injection control device for an internal combustion engine in accordance with one aspect of the invention causes fuel injection valves, which are driven by a control signal, in which a drive period which is more than a minimum drive period, is required necessarily to actually start the fuel injection by the control signal, and which inject fuel whose amount corresponds to a drive period, to carry out fuel injection for learning injection characteristics of the fuel injection valves. This fuel injection device comprises a sensor, storage means, injection condition setting means, sensor output value estimation means, characteristic curve estimation means, and correction means. An output value of the sensor changes in accordance with an amount of fuel injected from the fuel injection valves. The storage means stores, as a reference change in output value, a change in an output value of the sensor, which corresponds to a predetermined injection amount as a preset fuel injection amount and a sensor output value corresponding to a value at the time when no fuel is injected. The injection condition setting means acquires an output value of the sensor by setting the drive period as a non-injection period that is shorter than a minimum drive (energization) period prior to the actual start of injection, and acquires output values of the sensor by setting the minimum drive (energization) period as a plurality of injection periods that are longer than the time lag and that are different in length, during fuel injection for learning the injection characteristics. The sensor output value estimation means estimates a sensor output value in the case where fuel injection amount is equal to the predetermined injection amount on the basis of an output value of the sensor in the case where drive period is within the non-injection period and on the basis of the reference change in output value. The characteristic curve estimation means estimates a characteristic curve indicating a relationship between sensor output value and drive period in an injection period on the basis of output values of the sensor corresponding to the injection periods. The correction means corrects a drive period such that the sensor output value estimated by the sensor output value estimation means corresponds to a drive period at the time when the predetermined injection amount is required on the characteristic curve indicating the relationship between sensor output value and drive period.

Each of sensor output values can be obtained for a corresponding one of a plurality of drive periods in an injection period. Thus, a characteristic curve indicating a relationship between sensor output value and drive period can be estimated, and a difference from a standard characteristic curve indicating a relationship between sensor output value and drive period becomes apparent. On the other hand, a sensor output value at the time when no fuel is injected is obtained by setting the drive period as a non-injection period. If the sensor output value at this moment is shifted by a reference change in output value, a sensor output value at the time when a predetermined amount of fuel is injected becomes apparent. Thus, injection characteristics of injectors are specified. As in the case of the art disclosed in Japanese Patent Application Laid-Open No. 2001-90580, the injection characteristics thus specified do not require detection of negligible changes in sensor output value corresponding to the pitch and therefore are highly reliable. Thus, the drive period can be corrected such that a suitable injection amount can be obtained.

The reference change in output value corresponding to the predetermined injection amount may be stored, and the drive period may be corrected such that the sensor output value estimated by the sensor output value estimation means corresponds to the drive period at the time when the predetermined injection amount is required on the characteristic curve indicating the relationship between sensor output value and drive period.

When injection of fuel of the predetermined injection amount is required, the drive period is optimized. Accordingly, the predetermined injection amount is set as an injection amount where the highest regulating precision is required as in the case of an injection amount range that is adopted during later-described pilot injection or the like. As a result, highly practical correction is accomplished.

The correction means may calculates a drive period corresponding to the estimated sensor output value on the characteristic curve indicating the relationship between sensor output value and drive period and may perform off-set correction of the drive period in such a manner as to counterbalance changes in the calculated period.

By performing off-set correction of the drive period, the regulating precision at the time when the predetermined injection amount of fuel is required to be injected can be thoroughly ensured by a slight burden of calculation.

The correction means may be designed to correct a drive period in accordance with a pre-correction drive period in such a manner as to counterbalance changes in gradient of the characteristic curve indicating the relationship between sensor output value and drive period.

The gradient of the characteristic curve indicating the relationship between sensor output value and drive period changes depending on individual differences among injectors or the like. Also, the drive period where a certain injection amount is obtained changes depending on individual differences among injectors or the like. Thus, by removing the influence of changes in gradient of the characteristic curve indicating the relationship between sensor output value and drive period on the injection amount, it becomes possible to further enhance regulating precision in a wide range of injection amount range.

In the above-mentioned construction, the fuel injection control device further may comprises operational state detection means that detects an operational state of the internal combustion engine, and learning-purpose fuel injection prohibition means that prohibits fuel injection for learning the injection characteristics if an operational state detected by the operational state detection means is not a preset operational state.

By setting a state where the influence of proximate performance of fuel injection can be regarded as not remaining in the sensor output value as an operational state allowing learning-purpose fuel injection, it becomes possible to perform learning-purpose fuel injection with the sensor output value having returned to a zero point. Thus, correcting precision is further enhanced.

According to another aspect of the invention thus constructed, when calculating a minimum drive period for the fuel injection valves, namely, a drive period which is more than a minimum drive period, and necessarily to actually start the fuel injection , a sensor whose change in output value corresponds to fuel injection amount is provided, and a sensor output value corresponding to a value at the time when no fuel is injected is set as a threshold in calculating a minimum drive period. Furthermore, at least first and second sensor output values are detected under conditions with mutually different fuel injection amounts. An approximation formula is derived by interpolating the first and second sensor output values. In calculating a minimum drive period, the minimum drive period is calculated on the basis of the approximation formula and the threshold.

That is, the approximation formula represents a fuel injection amount at each moment. Therefore, by converting a timing when the injection amount becomes zero (no injection) in the approximation formula, that is, a timing when the amount of change in sensor output value becomes zero into a minimum drive period for the fuel injection valves, it becomes possible to precisely calculate a minimum drive period within a short time without actually measuring a sensor output value at the time when injection is started.

As for a sensor output value corresponding to a value at the time when no fuel is injected, it is also appropriate that the minimum drive period calculation means actually measure a sensor output value corresponding to the value at the time when no fuel is injected in a period in which injection can be regarded as not being carried out and set the sensor output value as a threshold for calculation of a minimum drive period, under circumstances where a minimum drive period is to be calculated.

In this construction, a sensor output value as a threshold for calculation of a minimum drive period is actually measured and set as a threshold under circumstances where a minimum drive period is to be calculated. Therefore, it is possible to set a threshold in accordance with circumstances at each moment.

It is desirable that the sensor output value one of combustion pressure, amount of change in engine speed, exhaust gas state, and kinetic energy of an engine body as a sensor output value.

That is, items such as combustion pressure, amount of change in engine speed, exhaust gas state, and kinetic energy of the engine body change depending on combustion of fuel that has actually been injected. Thus, changes in output value corresponding to injection amount as mentioned in the invention can be obtained. The above-mentioned "kinetic energy of the engine body" is a concept that also includes changes in vibrational energy of the engine body. In a broad sense, this concept also includes amounts of change in engine output and the like.

It is also appropriate that the minimum drive period calculation means monitor measuring environments of a sensor output value in the periods respectively in association with an operational state of the internal combustion engine and detect a sensor output value in accordance with an individual condition for detecting each of sensor output values if the measuring environments coincide with each other.

In this construction, when detecting the sensor output values, the timing when the measuring environments thereof coincide with each other can be regarded as a timing when the sensor output values are to be detected, and the sensor output values are detected in accordance with individual conditions for detecting the sensor output values. Therefore, a difference between the measuring environments affecting the sensor output values respectively is eliminated, and an approximation formula can be calculated with higher precision. In the foregoing description, "the individual conditions for detecting the sensor output values respectively" are conditions with mutually different fuel injection amounts as described above.

It is desirable that a second sensor output value, which is one of the sensor output values for the drive periods, be detected when the influence of fuel injection on a first sensor output value that has been detected prior to the second sensor output value can be regarded as having converged.

That is, in this construction, the second sensor output value is detected when the influence of fuel injection on the first sensor output value can be regarded as having converged. Thus, changes in both the first and second output values corresponding to a fuel injection amount at each moment can be precisely detected. Therefore, the approximation formula can be derived with higher precision.

It is also possible to adopt a construction in which correction means that corrects a prescribed minimum drive period determined in terms of the fuel injection control on the basis of a minimum drive period calculated by the minimum drive period calculation means in such a manner as to actually start fuel injection in response to the start of the fuel injection control is provided.

In this construction, the prescribed minimum drive period determined in terms of fuel injection control is corrected on the basis of the minimum drive period that has been calculated. Therefore, after correction has been made, fuel injection is reliably started in response to the start of fuel injection control. It is to be noted herein that "the prescribed minimum drive period" is a minimum drive period that is supposed to be required for the actual start of fuel injection in the fuel injection control program.

In the case where the internal combustion engine is a multi-cylinder internal combustion engine and where each of the fuel injection valves is disposed in a corresponding one of cylinders, it is appropriate that the minimum drive period calculation means calculate a minimum drive period from the start of driving to the start of injection for each of the cylinders, and the correction means individually correct fuel injection control corresponding to each of the cylinders on the basis of a minimum drive period calculated for each of the cylinders.

That is, in a multi-cylinder internal combustion engine, fuel injection control needs to be made appropriate for each of the cylinders in performing correction of fuel injection control. Thus, in this construction, minimum drive periods are calculated for the cylinders respectively, and fuel injection control for each of the cylinders is individually corrected on the basis of a corresponding one of the minimum drive periods thus calculated.

## BRIEF DESCRIPTION OF THE DRAWINGS

Next, embodiments of the invention will be described with reference to the following drawings.

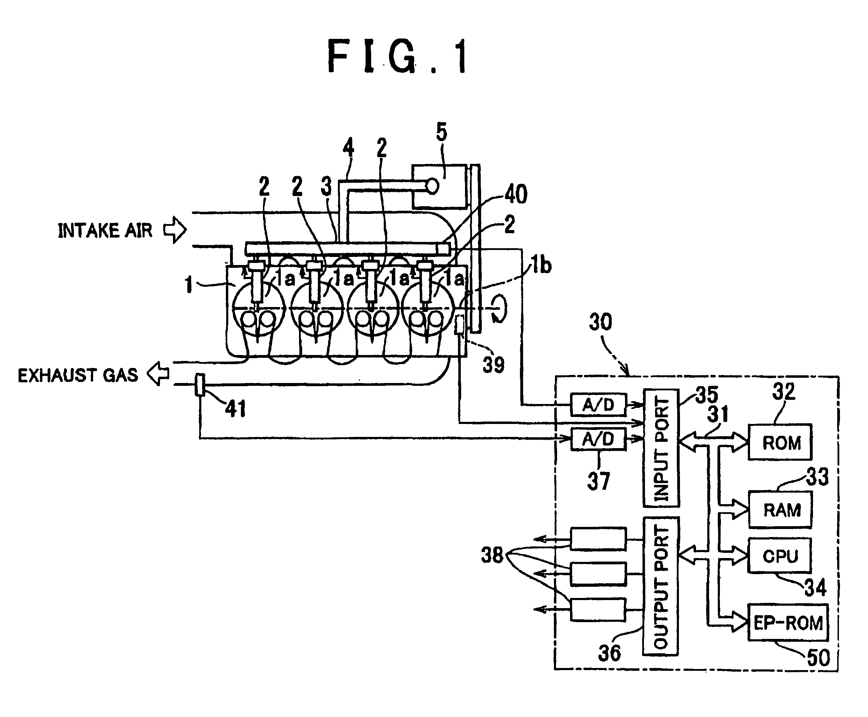

Fig. 1 is a schematic block diagram of a fuel injection device in accordance with one embodiment.

Figs. 2A and 2B are first and second parts, respectively, of a flowchart for explaining minimum drive period calculation control and fuel injection correction control in accordance with the embodiment.

Fig. 3 is an explanatory view of the contents of processings in S108 to S110 in the flowchart shown in Fig. 2.

Fig. 4 shows an approximate curve obtained through three-point approximation in calculating a minimum drive period.

Figs. 5A and SB are first and second parts, respectively, of a flowchart showing the contents of control performed by an ECU that controls various parts of the internal combustion engine and that constitutes the fuel injection control device.

Fig. 6 is a second flowchart showing the contents of control performed by the ECU.

Fig. 7 is a graph for explaining the contents of control performed by the ECU.

Figs. 8 A and 8B are other graphs for explaining the contents of control performed by the ECU.

Fig. 9 is a graph for explaining a modification example of the fuel injection control device to which the invention is applied.

Fig. 10 is another graph for explaining a modification example of the fuel injection control device to which the invention is applied.

Fig. 11 is an explanatory view of detection of sensor output values during speeding-up operation and slowing-down operation.

Pig. 12 is an explanatory view of a method of detecting a minimum drive period in accordance with the related art.

Fig. 13 is an explanatory view of a deterioration in detecting precision as a problem caused in the method of detecting a minimum drive period in accordance with the related art.

## DETAILED DESCRIPTION OF PREFERRED EMBODIMENTS

Hereinafter, the preferred embodiments of the fuel injection device in accordance with the invention will be described with reference to the drawings. The embodiments handle a case in which the fuel injection device of the invention is applied to a vehicular diesel engine. The scope of application of the invention is obviously not limited thereto. The construction of the fuel injection device described below is nothing more than an example. Details of the fuel injection device can be modified depending on specifications of the internal combustion engine.

The fuel injection device of the embodiment has fuel injection valves 2, a common rail (accumulation chamber) 3, a fuel feed pipe 4, a fuel pump 5, an electronic control unit 30 that controls the fuel injection valves 2, and the like. This fuel injection device supplies a suitable amount of fuel to cylinders la of an internal combustion engine 1 at a suitable timing.

Each of the fuel injection valves 2 is an electromagnetically driven open-close valve that is disposed in a corresponding one of the cylinders 1a. Opening movements of the fuel injection valves 2 are controlled on the basis of a fuel injection program that is prepared in the electronic control unit 30. The common rail 3 is a distributing pipe for supplying fuel to the fuel injection valves 2, and is coupled to the fuel pump 5 via the fuel feed pipe 4. The fuel pump 5 is rotationally driven with rotation of a crank shaft 1b as an output shaft of the internal combustion engine 1 being used as a drive source. The fuel pump 5 discharges fuel to the common rail 3 at a desired pump pressure.

On the other hand, the electronic control unit 30 has a ROM (read-only memory) 32, a RAM (random access memory) 33, a CPU (central processing unit) 34, an EP-ROM 50 as a non-volatile memory, an input port 35, an output port 36, and the like, which are interconnected by a bi-directional bus 31.

Each of a crank position sensor (NE sensor) 39 that detects a rotational angle of the crank shaft 1b, a common rail pressure sensor 40 that detects a pressure (fuel injection pressure) in the common rail 3, an air-fuel ratio sensor (A/F sensor) 41 disposed in an exhaust passage of the internal combustion engine 1, and the like is connected to the input port 35 either directly or via a corresponding one of A/D converters 37. Each of the fuel injection valves 2 and the like is connected to the output port 36 via a corresponding one of drive circuits 38.

A valve-opening control program of the fuel injection valves 2 as a fuel injection control program, a program for correcting later-explicated operating characteristics of the fuel injection valves 2, and the like are recorded in the ROM 32. Output signals input to the input port 35 from the sensors, control signals output to the output port 36, and the like are sequentially read into the RAM 33. These signals are temporarily recorded in the RAM 33. The CPU 34 outputs control signals, which are output in the course of processings thereof, to the output port 36 at a suitable timing on the basis of the signals recorded in the RAM 33, control programs recorded in the ROM 32, and the like. For example, the CPU 34 processes fuel injection control in which valve-opening movements of the fuel injection valves 2 are controlled.

In the fuel injection valve thus constructed, fuel in a fuel tank (not shown) is first pumped up by the fuel pump 5. The fuel thus pumped up is supplied to the common rail 3 via the fuel feed pipe 4. The fuel supplied to the common rail 3 is pressurized therein to a predetermined fuel pressure, and is distributed to the fuel injection valves 2. If valve-opening signals are output to the fuel injection valves 2 on the basis of fuel injection control that is processed in the electronic control unit 30, the fuel injection valves 2 are opened, and the fuel in the common rail 3 is injected and supplied into each of the cylinders la via a corresponding one of the fuel injection valves 2.

As described in the description of the related art, "pilot injection" that is capable of reducing combustion noise and suppressing generation of nitrogen oxides (NOx) has been drawing attention as one form of the multiple injection technologies in which fuel is injected a plurality of times in each combustion cycle. In the multiple injection technologies typified by this pilot injection, it is required to perform fuel injection control more finely in comparison with the related art.

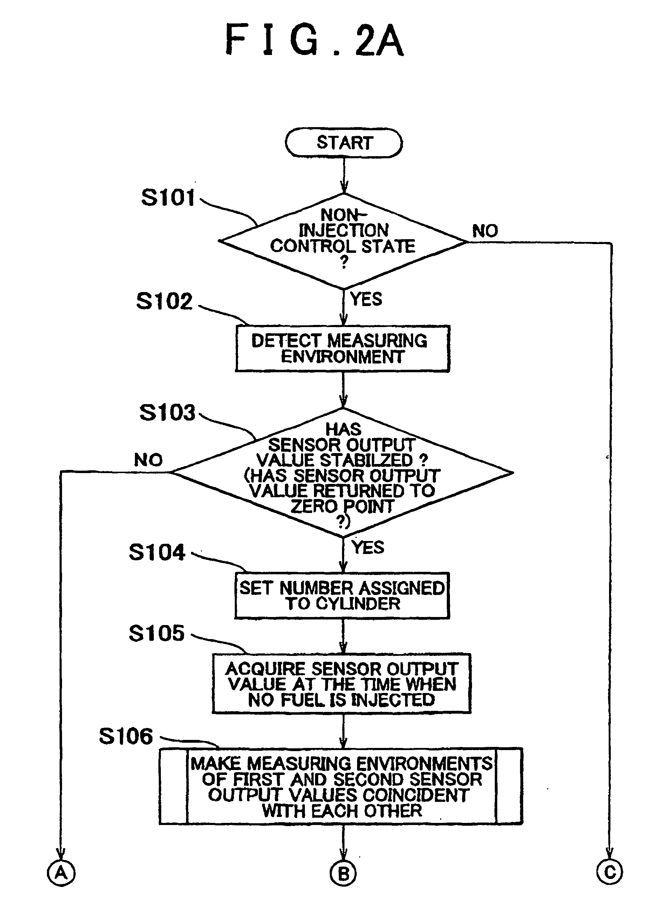

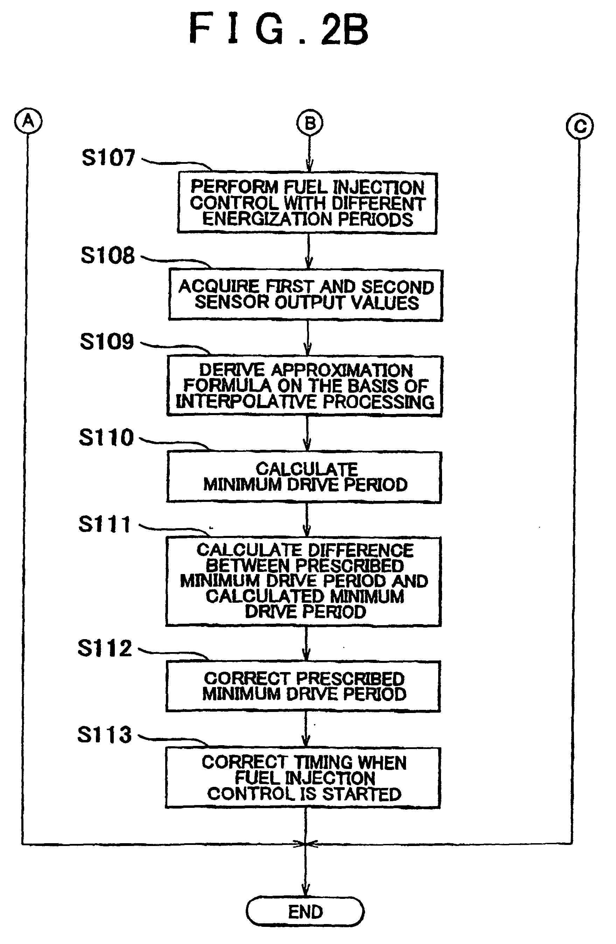

However, the operating characteristics of the fuel injection valves 2 are correlated to fuel injection control and greatly change depending on manufacturing tolerances thereof, deterioration resulting from abrasion of valve bodies, or the like. Hence, in the fuel injection device of the embodiment, "minimum drive period calculation control" for grasping the operating characteristics of the fuel injection valves 2 is performed as part of fuel injection control as is apparent from the flowchart shown in Fig. 2. Also, fuel injection control is made appropriate by performing "fuel injection correction control" in which a prescribed minimum drive period that is determined in performing fuel injection control is corrected on the basis of a minimum drive period calculated by the above-mentioned injection period calculation control.

First of all, the outline of minimum drive period calculation control and fuel injection correction control will be described prior to detailed description thereof.

In minimum drive period calculation control, under circumstances where a minimum drive period is to be calculated, a sensor output value that changes in accordance with an injection amount is read during a period that is estimated to correspond to a non-injection state. The sensor output value is regarded as a sensor output value at the time when no fuel is injected, and is set as a threshold for calculation of a minimum drive period. Further, at least first and second sensor output values that have been detected under conditions with mutually different fuel injection amounts are read, and are interpolated to obtain an approximation formula. A minimum drive period is calculated on the basis of the threshold thus set and the approximation formula.

On the other hand, in fuel injection correction control, a prescribed minimum drive period that is determined for fuel injection control is corrected on the basis of a minimum drive period that has been calculated in minimum drive period calculation control, so that fuel injection is actually started in response to the start of fuel injection control.

Thus, in the fuel injection device of the embodiment, a minimum drive period is calculated from a sensor output value at the time when no fuel is injected and at least first and second sensor output values that have been read under conditions with mutually different conditions. The fuel injection device makes fuel injection control appropriate on the basis of the minimum drive period thus calculated.

Hereinafter, details of minimum drive period calculation control and fuel injection correction control will be described with reference to Fig. 2. A processing routine shown below handles a case where the fuel injection device of the embodiment is applied to the multi-cylinder internal combustion engine 1. The crank position sensor 39 that detects a rotational angle of the crank shaft 1b is utilized as a sensor that is used in calculating a minimum drive period.

An output value of the crank position sensor 39 will now be described. The output value represents a crank angle (position) of the crank shaft 1b at each moment, but can be read as a change in output value corresponding to a fuel injection amount by being associated with time. That is, an increase in fuel injection amount causes an increase in rotational speed of the crank shaft 1b and a decrease in time required for rotation by a unit crank angle. A decrease in fuel injection amount causes a decrease in rotational speed of the crank shaft 1b and an increase in time required for rotation by a unit crank angle.

It is to be noted herein that "unit crank angle" is an angle that can be arbitrarily set, for example. from the top dead center (TDC) to 50° past the top dead center (ATDC). In the embodiment, the electronic control unit 30 for executing a processing routine shown below and various sensor groups required for execution of the processing routine constitute the minimum drive period calculation means and the correction means of the invention.

First of all, in calculating a minimum drive period, the electronic control unit 30 determines whether or not a current fuel injection control state is a non-injection control state (step (hereinafter referred to as "S") 101). In response to a determination result that the current fuel injection control state is the non-injection control state, the electronic control unit 30 proceeds to the next step so as to start calculating a minimum drive period.

In the embodiment, the presence of a non-injection control state is recognized during fuel cut control as one control that is performed in an internal combustion engine. For example, while fuel cut control is being performed or if a vehicle has reached a slowing-down running state in which fuel cut control is performed, the presence of a non-injection control state is recognized. It is to be noted herein that fuel cut control is known fuel injection control that is designed to suppress injection of an excessive amount of fuel and discharge of unburnt components (HC) in a slowing-down running state.

Then in S102, for the purpose of grasping measuring environments of first and second sensor output values, each of the measuring environments is monitored in association with a current operational state.

The measuring environments are monitored so as to detect the sensor output values under a constant measuring environment. If the measuring environments change, the sensor output values change as well. In S102, the measuring environment of each of the sensor output values is monitored in association with an operational state of the internal combustion engine 1. If both the measuring environments coincide with each other, reading the sensor output values is permitted in accordance with a condition (fuel injection amount) for detecting each of the sensor output values.

In the embodiment, as an operational state of the internal combustion engine that is monitored in setting measuring environments, engine speed and fuel injection pressure (common rail pressure), which are closely correlated to combustion of injected fuel, are defined as main items to be monitored.

More specifically, this is because changes in engine speed affect concentrations of oxygen contained in the cylinders and lead to fluctuations in combustion efficiency. On the other hand, this is also because fuel injection pressure affects a state of atomization during fuel injection and leads to changes in combustion efficiency. Thus, by monitoring engine speed and fuel injection pressure that affect combustion efficiency, it becomes possible to grasp combustion efficiency and to reduce the number of detection errors in the measuring environment of each of the sensor output values.

It is to be noted herein that mutual coincidence of the measuring environments does not mean complete numerical coincidence of engine speeds or fuel injection pressures. It is sufficient that the measuring environments be regarded as coincident with each other with respect to combustion efficiency. For example, it is acceptable that engine speeds or fuel injection pressures at the time when the sensor output values are detected be slightly different from each other.

Then, in response to a result that the output value of the crank position sensor 39 has stabilized to an output value (amount of change in output value=0) corresponding to a non-injection control state (S103). the electronic control unit 30 proceeds to S103 so as to detect sensor output values. If the output value of the crank position sensor 39 has not become equal to the output value corresponding to the non-injection control state, the present processing routine is temporarily terminated.

Then, the electronic control unit 30 sets a number assigned to that one of the cylinders whose minimum drive period is to be calculated (S104), and detects (acquires) a sensor output value at the time when no fuel is injected, that is, a sensor output value that is used to calculate a minimum drive period (S105).

Under a measuring environment in which the measuring environments of the first and second sensor output values coincide with each other (S106), fuel injection control with mutually different fuel injection amounts is performed at least twice (S107). In fuel injection control, the first and second sensor output values are detected (acquired) in accordance with corresponding fuel injection control (S108).

Because fuel injection control performed herein requires reliable fuel injection, an energization period that is sufficiently longer than the prescribed minimum drive period is set each time. "The prescribed minimum drive period" is a period in which the fuel injection valves 2 are driven (energized) and in which fuel injection can be regarded as being performed according to the control program recorded in the electronic control unit 30.

Then, the electronic control unit 30 derives an approximation formula by interpolating the first and second sensor output values (S109), and calculates a minimum drive period for the fuel injection valves 2 on the basis of a sensor output value corresponding to a value at the time when no fuel is injected and the approximation formula derived in S109 (S110).

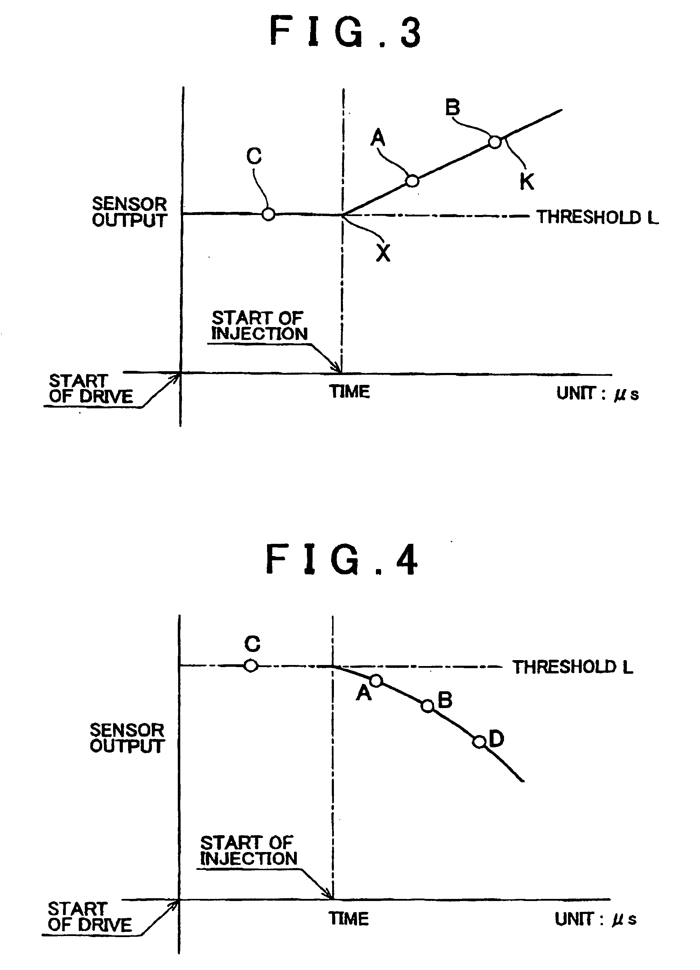

Fig. 3 is a minimum drive period calculation graph that is utilized in calculating a minimum drive period. In the present processing routine, this graph is mathematized and recorded in the electronic control unit 30, and the above-mentioned sensor output values are read into the electronic control unit 30, whereby the processings in S109 and S110 are performed.

Calculation of a minimum drive period will now be described with reference to Fig. 3. The minimum drive period is calculated through the following processings. First of all, the axis of abscissa of the graph indicates the lapse of time since the start of fuel injection control (the start of energization), and the axis of ordinate indicates amount of change in sensor output value, that is, injection amount. A threshold L in an upper part of the graph is a sensor output value corresponding to a value at the time when no fuel is injected.

In the embodiment, since the crank position sensor 39 is used as a sensor, the sensor has the following characteristics. That is, with the threshold L being defined as a base line for changes in output value, the amount of change in sensor output value increases in a direction toward an area above the base line. In other words, the injection amount increases as the output value becomes larger than the threshold L.

First of all, in the processing in S109, after fuel injection control has been performed, the first sensor output value (indicated by a point A in Fig. 3) and the second sensor output value (indicated by a point B in Fig. 3), which have been detected under conditions with mutually different fuel injection amounts, are read on the graph. An approximation formula K is derived from those two points.

Then, in the processing in S110, a sensor output value (indicated by a point C in Fig. 3) at the time when no fuel is injected, that is, a sensor output value that has been detected in a non-injection control state is read on the graph as the threshold L for calculation of a minimum drive period. In the approximation formula K, a timing when the amount of change in sensor output value becomes zero, that is, a timing when the fuel injection amount becomes zero is derived from an intersection (indicated by a point X in Fig. 3) with the threshold L. A difference between a timing defined by the intersection X and a timing when energization is started is regarded as a minimum drive period for the fuel injection valves 2.

Thus, in the present processing routine, when a minimum drive period for the fuel injection valves 2 is calculated, a sensor output value corresponding to a value at the time when no fuel is injected is set as a threshold for calculation of a minimum drive period. Furthermore, an approximation formula is derived by interpolating at least first and second sensor output values that have been detected in accordance with fuel injection control with mutually different fuel injection amounts. In calculating a minimum drive period, the minimum drive period is calculated on the basis of the approximation formula and the threshold.

Thus, in calculating a minimum drive period, there is no need to pick up minor changes in sensor output value resulting from fuel injection, and sensor output values can be picked up in a detection range where relatively major changes in output value can be obtained. Therefore, the minimum drive period can be accurately grasped. It is sufficient that detection (actual measurement) of a sensor output value be carried out three times, including detection of a sensor output value at the time when no fuel is injected. Thus, the time required for calculation of a minimum drive period is short.

Then, fuel injection correction control that follows S110 will be described.

First of all, in order to correct a prescribed minimum drive period determined in terms of fuel injection control on the basis of the minimum drive period calculated in S110, the electronic control unit 30 calculates a difference between a prescribed minimum drive period in the cylinder set in S104 and the minimum drive period calculated in S110, that is, a deviation from a control value (S111). Then, the electronic control unit 30 corrects the prescribed minimum drive period so as to reduce the difference thus calculated (S112), and advances or retards a timing for starting fuel injection control in accordance with an increase or decrease in the minimum drive period resulting from the correction (S113). In this manner, the start of fuel injection at a normal timing for starting injection is ensured.

Thus, in the present processing routine, after a minimum drive period has been calculated, a prescribed minimum drive period is corrected in such a manner as to reduce a difference between the calculated minimum drive period and a prescribed minimum drive period, and a timing for starting fuel injection control is changed in accordance with an amount of correction. Therefore, after the present processing routine has been terminated, fuel injection is reliably started at a normal timing for starting injection.

It is to be noted herein that the above-mentioned processing routine is nothing more than an example and that details thereof can be modified.

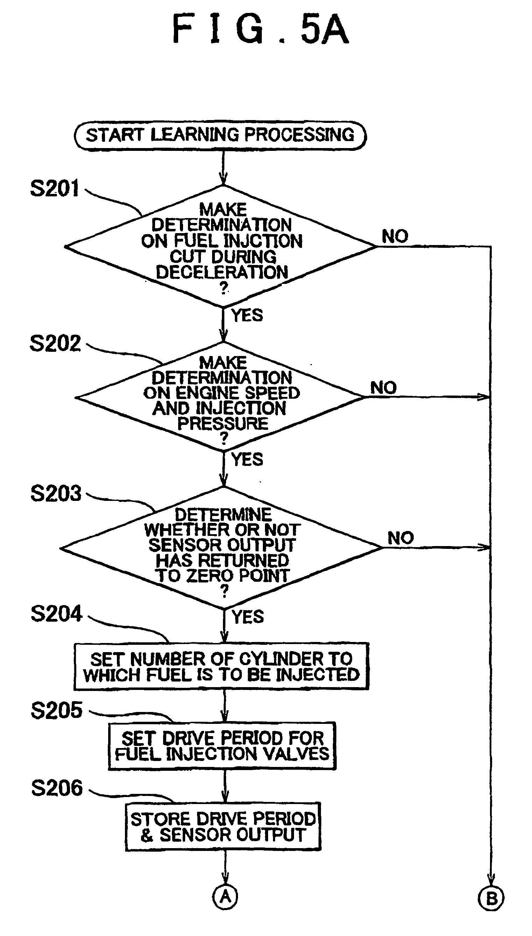

For example, in the above-mentioned processing routine, an approximation formula is derived by carrying out detection of a sensor output value twice, that is, by detecting first and second sensor output values after fuel injection has been started. However, if the number of times of detection of a sensor output value is increased, the precision in calculating a minimum drive period is enhanced correspondingly. More specifically, as shown in Fig. 4, it is also appropriate that a third sensor output value D as well as the first sensor output value A and the second sensor output value B be detected during fuel injection control with fuel injection amounts different from the first sensor output value A and the second sensor output value B, and that a minimum drive period be calculated on the basis of "three-point approximation". It is to be noted herein that a point C in Fig. 4 represents a sensor output value at the time when no fuel is injected. In Fig. 4, output values of a sensor (e. g., an air-fuel ratio sensor) whose sensor output value moves downwards in the graph with increases in fuel injection amount are utilized.

As for detection of the first and second sensor output values, the present processing routine is designed to detect a sensor output value by performing fuel injection control for detecting a sensor output value during fuel cut control. However, the first and second sensor output values can also be detected, for example, when fuel injection control is performed during speeding-up operation or when fuel injection control is performed during slowing-down operation prior to the start of fuel cut control. That is, detection of a sensor output value that is related to calculation of a minimum drive period is possible in each of circumstances with different fuel injection amounts. It is not absolutely required that detection of a sensor output value be carried out when no fuel is injected.

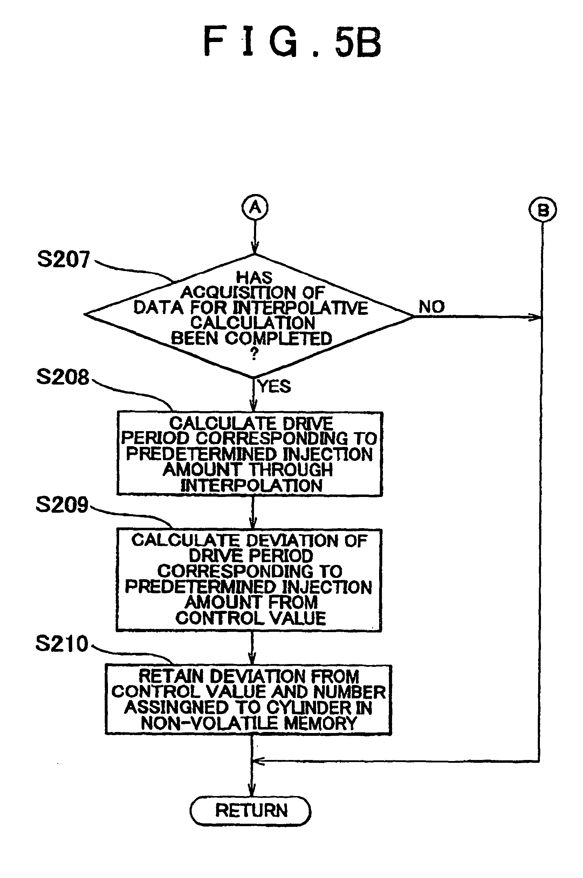

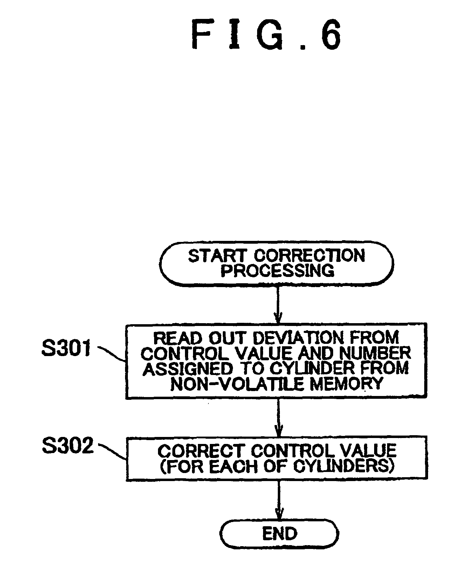

Reference will now be made to flowcharts showing another embodiment of the invention. Figs. 5 and 6 show fuel injection control that is performed by the electronic control unit 30. This routine constitutes a part of fuel injection control, more specifically, a part for learning injection characteristics of the fuel injection valves 2, and is activated, for example, in synchronization with a crank angle. The routine can be activated at intervals of approximately 180°CA, that is, substantially at such intervals that fuel injection is sequentially carried out by shifting the cylinder to which fuel is to be injected. Although not shown, controls that are performed by an ECU of a generally employed diesel engine for various parts thereof are obviously performed by the electronic control unit 30 as well. In S201 to S203, it is determined whether or not a timing for carrying out learning-purpose fuel injection has been reached. In S201, it is determined whether or not an accelerator has been turned off with fuel injection being stopped, that is, whether or not the opening of a throttle valve is 0% with fuel injection being stopped. Thus, if the operation proceeds to fuel injection cut control in which normal fuel injection for obtaining power during deceleration or after idling at the time of stoppage of the vehicle is carried out, the result in S201 turns out to be positive. If the result in S201 turns out to be positive, the operation proceeds to S202.

In S202, an engine speed and an injection pressure are fetched, and it is determined whether or not they are equal to predetermined values respectively. The predetermined values are stored in the ROM 32 in advance, and are set as an engine speed to be learned and an injection pressure to be learned, respectively. This is because of the purpose of preventing a sensor output value from being affected by an engine state and allowing a dispersion resulting only from individual differences among the fuel injection valves 2 to emerge in a sensor output value for a certain drive period. Because an engine speed and an injection pressure most remarkably affect a combustion state of injected fuel, the control burden imposed in determining whether or not the engine is in a predetermined operational state can be reduced while sufficiently preventing a sensor output value from being affected by an operational state of the engine. This is the reason for directing attention to the engine speed and the injection pressure. More specifically, an engine speed affects a concentration of oxygen contained in the cylinders and has an influence on combustion efficiency. An injection pressure affects a state of atomization at the time of fuel injection and has an influence on combustion efficiency.

When determining whether or not the engine speed and the injection pressure are equal to the predetermined values respectively, it is not required that they be exactly equal to the predetermined values respectively. That is, it is acceptable that the engine speed and the injection pressure be higher or lower than the predetermined values respectively by a certain tolerance. It is acceptable that the engine speed and the injection pressure be the predetermined values ± the tolerance. As a matter of course, the tolerance is stored in the ROM 32 in advance.

If the result in S202 is positive, the operation proceeds to S203.

A processing as the learning-purpose fuel injection prohibition means is performed in S203. It is determined in S203 whether or not the sensor output value has returned to a zero point. This is because the above-mentioned measurement for the purpose of learning is to be carried out in a state free from the influence of proximate fuel injection. The influence of proximate fuel injection remains in engine speed for a while, for example, due to inertia of the engine. Therefore, in the case where engine speed is used as a sensor output value, there is an apprehension that the sensor output value has not returned to the zero point despite a non-injection state. A few cycles are required until gas remaining in the cylinders is removed. Therefore, in the case where oxygen concentration is used as a sensor output value, there is an apprehension that the sensor output value has not returned to the zero point despite a non-injection state. Thus, by confirming that the sensor output value has returned to the zero point prior to injection based on learning, the reliability of learning can be enhanced. More specifically, a determination is made depending on whether or not the sensor output value has stabilized, that is, whether or not fluctuations in output value have converged. If the result in S203 turns out to be positive, the operation proceeds to S204.

If the results in S201 to S203 turn out to be negative, the operation is returned.

Processings as the injection condition setting means are performed in S204 and S205. In S204, a number assigned to that one of the cylinders to which fuel is to be injected subsequently is set. Because fuel injection cut control is performed in S201, the number of that one of the cylinders to which fuel would be injected if normal fuel injection for obtaining power were carried out is actually set.

In S205, a drive period for the fuel injection valves 2 is set. In the case of fuel injection valves that are equipped with solenoid-operated actuators so as to be opened or closed, the drive period is a period in which the solenoids are energized. In the case of fuel injection valves that are equipped with piezoelectric actuators, the drive period is a charge-holding period, that is, a period between a timing when the piezoelectric actuators are charged with electricity and a timing when the piezoelectric actuators are discharged of electricity. One of three levels $\tau0$, $\tau a$, and $\tau b$ is selected as the drive period. For each of the cylinders, it is recorded whether or not a selection has been made. For the cylinder selected in S204, that one of the levels which has not been set is selected. The magnitudes of $\tau0$, $\tau a$, and $\tau b$ will be described later.

Thus, a control signal is output value to the fuel injection valves 2 for the drive period thus set, and a sensor output value at that moment is stored (S206). As a matter of course, a sensor output value is fetched with a predetermined delay with respect to a control signal so that the sensor output value reflects a degree of combustion of injected fuel corresponding to a fuel injection amount. In the following description, it is assumed that S0 represents a sensor output value at the time when the drive period is $\tau_0$, that Sa represents a sensor output value at the time when the drive period is $\tau_a$, and that Sb represents a sensor output value at the time when the drive period is $\tau_b$. As will be described later, these data are intended to specify injection characteristics of the fuel injection valves 2 in operations including interpolative calculation (hereinafter these data will sometimes be referred to as "interpolative calculation data").

In S207, it is determined whether or not acquisition of the interpolative calculation data has been completed. This determination is made depending on whether or not the interpolative calculation data have been acquired as to all of $\tau_0$, $\tau_a$, and $\tau_b$ for the cylinder selected in S204.

If the result in S207 turns out to be positive, the operation proceeds to S208, and learning-purpose fuel injection has not been carried out yet for any one of $\tau_0$, $\tau_a$, and $\tau_b$. If the result in S207 turns out to be negative, the operation is returned.

In S208, as for the cylinder selected in S204, a drive period $\tau_c$ corresponding to a predetermined injection amount Qst is calculated through interpolation according to a formula (1) using the acquired sensor outputs value S0, Sa, and Sb. In the formula (1), S represents a sensor output value corresponding to the predetermined injection amount Qst.

$$\tau_c = [(\tau_b - \tau_a)/(Sb - Sa)] \times (S - Sa) + \tau_a \qquad (1)$$

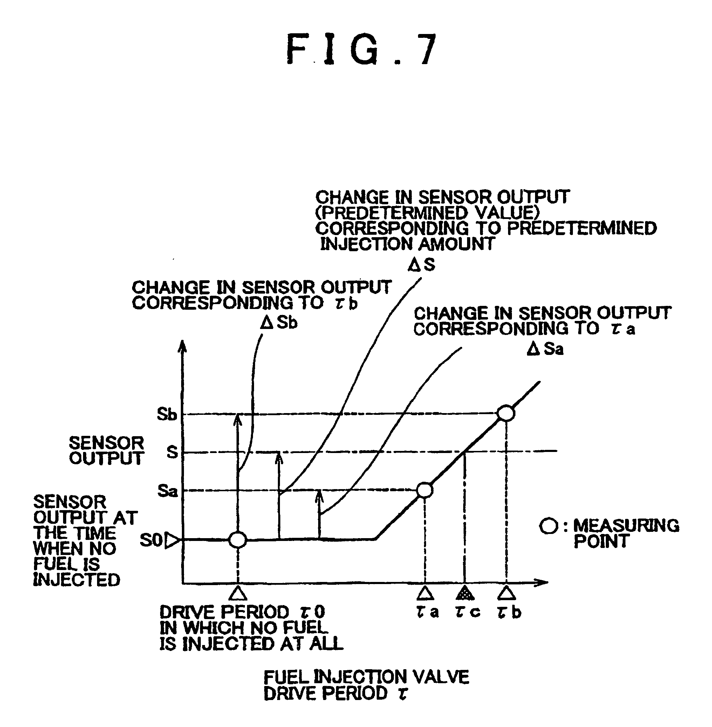

The drive periods $\tau_0$, $\tau_a$, and $\tau_b$ are set as follows. As shown in Fig. 7, $\tau_0$ represents a drive period in which injection is never carried out, that is, a drive period that is sufficiently shorter than a minimum drive (energization) period prior to the actual start of injection (In Fig. 7, although fuel injection valve energization period represents a drive period for fuel injection valves equipped with solenoid-operated actuators, a more or less similar graph is obviously obtained in the case of injectors equipped with piezoelectric actuators as well. The same will hold true for the following description.) In Fig. 7, $\tau_a$ and $\tau_b$ represent mutually different drive periods in which fuel is reliably injected. In a period in which no fuel is injected, the sensor output value is constant. In a period in which fuel is injected, a difference from the sensor output value at the time when no fuel is injected increases in accordance with a fuel injection amount. Accordingly, if it is assumed that $\Delta S$ represents a difference between the sensor output value corresponding to the predetermined injection amount Qst and the sensor output value at the time when no fuel is injected, a formula (2) is obtained. The difference $\Delta s$ can be calculated in advance through an experiment or the like.

$$S = S0 + \Delta S \qquad (2)$$

In S209, a deviation $\Delta \tau_c$ of a drive period that is actually required in obtaining the injection amount Qst from a control value thereof is calculated according to a formula (3). In the formula (3), $\tau_c0$ represents a reference drive period corresponding to the injection amount Qst, and is written into the ROM 32 in advance together with $\Delta S$ or the like.

$$\Delta \tau_c = \tau_c - \tau_c0 \qquad (3)$$

In S210, the deviation $\Delta \tau_c$ from the control value calculated in S209 and the number assigned to the cylinder selected in S204 are written into the non-volatile memory 50 as a pair and retained therein. Then, the operation is returned.

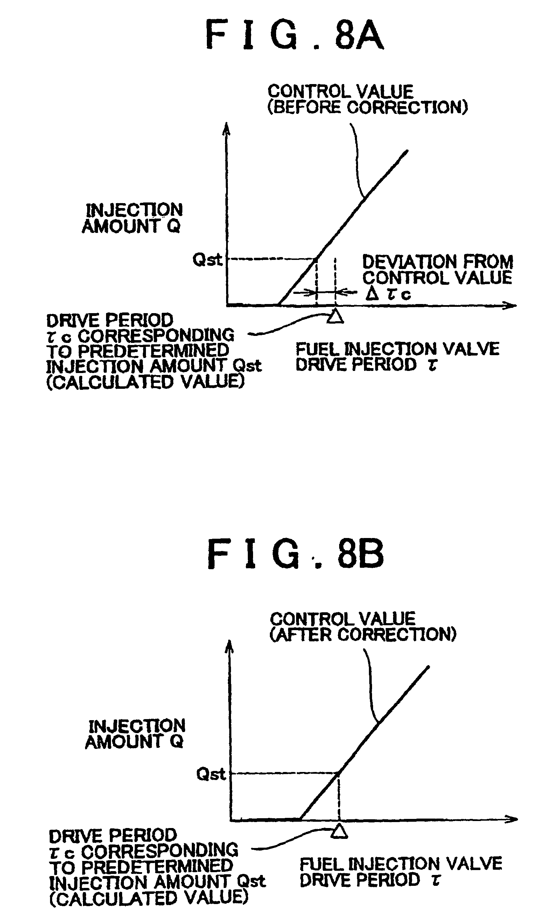

In S301 and S302, processings as the correction means are performed. In S301, the number assigned to the cylinder and the deviation $\Delta \tau_c$ from the control value corresponding to the number assigned to the cylinder are read out from the non-volatile memory 50. In S302, the control value is corrected. This correction is made by adding the deviation $\Delta \tau_c$ from the control value to the control value of the drive period that has been calculated from an accelerator opening or the like. Figs. 8A and 8B show a relationship between drive period $\tau$ and injection amount Q. Fig. 8A shows a pre-correction state, and Fig. 8B shows a post-correction state. Operation obtained from correction will now be described with reference to Figs. 8A and 8B.

In Fig. 8A, if a drive period for starting injection deviates due to individual differences among the fuel injection valves 2 or the like, a line indicating a relationship between actual injection amount and drive period fluctuates with respect to a line indicating a relationship between injection amount and control value of drive period. As a result, $\tau_c$ is not on the line indicating the relationship between injection amount and control value of drive period. When the amount of fuel injection is the predetermined value Qst, the actual drive period $\tau_c$ deviates from the control value by $\Delta \tau_c$. Hence, a regulation error is produced.

In making correction, the deviation $\Delta \tau_c$ from the control value of the pre-correction drive period is added to the control value. Thus, even if a characteristic curve indicating a relationship between actual injection amount and drive period has fluctuated as a result of individual differences among the fuel injection valves 2 or the like, the line indicating the relationship between injection amount and control value of drive period shifts. As a result, the characteristic curve and the line coincide with each other, whereby it becomes possible to enhance regulating precision.

In particular, the drive period $\tau$ is optimized when injection of the predetermined injection amount Qst of fuel is required. Therefore, it is appropriate that the predetermined injection amount Qst be an injection amount to be regulated most precisely. For example, this injection amount can be set as follows. Multiple injection in which fuel injection corresponding to one cycle of the engine is carried out a plurality of times is carried out. As one type of multiple injection, pilot injection is carried out prior to main injection. Because pilot injection is carried out to improve the profile of injection rate, the injection amount is a negligible amount of approximately $1mm^3/st$. Accordingly, a regulation error of a certain percentage thereof greatly affects emission properties (NOx, smoke, HC), fuel consumption, noise, and the like. Thus, if the predetermined injection amount Qst is set as an injection amount for pilot injection and if $\Delta S$ corresponding to the predetermined injection amount Qst is calculated in advance, regulating precision can be effectively enhanced during pilot injection that requires the highest regulating precision. Thus, the change AS in sensor output value corresponding to the predetermined injection amount Qst is stored, and the sensor output value S where the injection amount is equal to the predetermined injection amount Qst is estimated on the basis of the sensor output value S0 and the change $\Delta s$ in sensor output value, whereby correction is optimized from the standpoint of fuel injection of the injection amount Qst. Therefore, it is possible to efficiently suppress a deterioration in emission properties, a deterioration in fuel consumption, noise, and the like.

This deviation $\Delta \tau c$ from the control value of drive period can be measured without being affected by a pitch of the shift amount or the like as in the case of Japanese Patent Application Laid-Open No. 2001-90580.

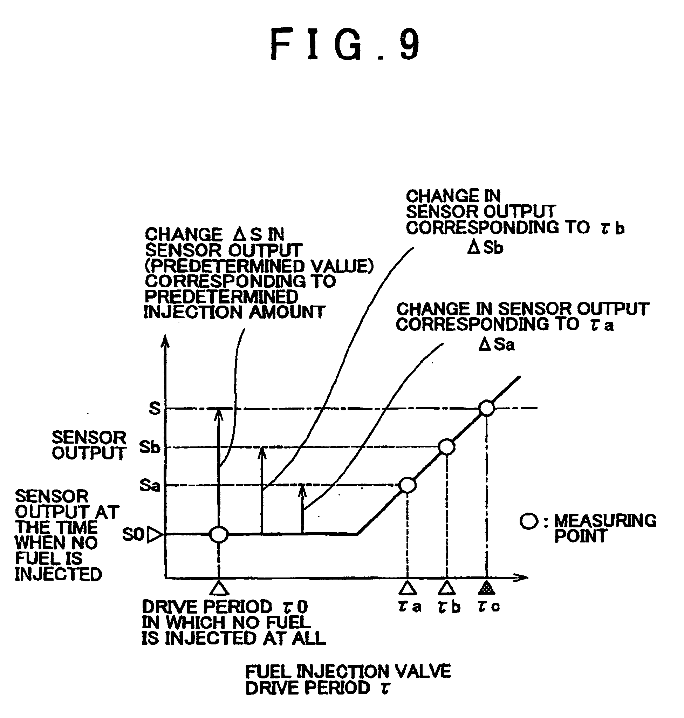

The scope of the deviation $\Delta \tau c$ from the control value is roughly known. Thus, depending on how to set $\tau a$ and $\tau b$ in advance, it is appropriate that $\tau c$ be calculated through interpolation as in the example shown in Fig. 7 or that $\tau c$ be calculated through extrapolation as shown in Fig. 9.

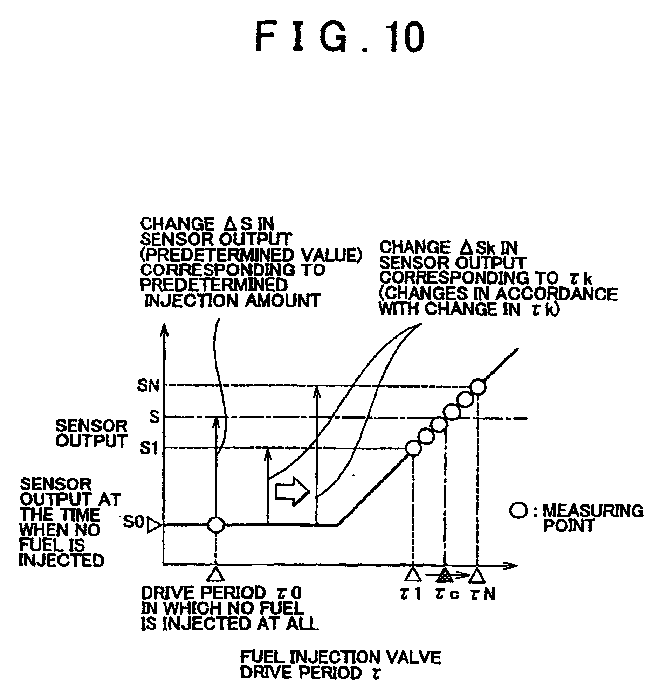

Instead of interpolation based on two-point data, it is also appropriate that $\tau c$ be calculated by specifying a characteristic curve in an injection period through measurement of three or more points as shown in Fig. 10. The characteristic curve can be specified, for example, by applying a minimum square-root method to N pairs of $(Sk, \tau k)$.

The deviation $\tau c$ is calculated when the injection pressure is equal to the predetermined value. However, when making correction in S302, the amount of correction may be adjusted in accordance with an injection pressure at that moment. In adjusting the amount of correction in accordance with the injection amount at that moment, it is also appropriate that a plurality of predetermined values for injection pressure be set in S202 during learning control, that the deviation $\tau c$ be obtained by calculating the sensor output values S0, Sa, Sb for each of the predetermined values and for each of the cylinders, and that an amount of correction corresponding to each of injection pressures be obtained from a corresponding one of a plurality of deviations through interpolation.

Alternatively, it is also appropriate that the predetermined value for injection pressure in S202 be set as an injection pressure that requires particularly high regulating precision, and that the control value of drive period be corrected only when the injection pressure assumes this value. In this case, it is not absolutely required that the injection pressure for correcting the control value exactly coincide with the predetermined value. As in the case of S202, it is sufficient that the injection pressure for correcting the control value be within an allowable range.

The gradient of the characteristic curve, that is, $(\tau b-\tau a)/(Sb-Sa)$ in the formula (1) depends on a flow rate of fuel injected from injection holes of the fuel injection valves 2. This flow rate of fuel fluctuates due to individual differences among the fuel injection valves 2 or a deterioration thereof. In correcting the drive period $\tau$, it is appropriate that changes in gradient as well as shift amounts be taken into account as correction values. More specifically, a ratio of $(\tau b-\tau a)/(Sb-Sa)$ to a reference gradient of the pre-correction characteristic curve is calculated, is multiplied by a difference between $\tau c$ and the pre-correction drive period $\tau$ corresponding to the predetermined injection amount Qst, and is set as a deviation amount $\Delta \tau'$. A post-correction drive period is obtained by adding both the deviation amounts $\Delta \tau c$ and $\Delta \tau'$ to the pre-correction drive period.

Detection of a sensor output value during speeding-up operation and slowing-down operation will now be described. For example, as shown in Fig. 11, a first sensor output value A is detected during speeding-up operation, and then a second sensor output value B is detected during slowing-down operation. By reading these output values on the map shown in Fig. 3, the approximation formula K is derived. A minimum drive period that is required for fuel injection from the fuel injection valves 2 is calculated from the approximation formula K and an intersection with the threshold L as a sensor output value at the time when no fuel is injected. In this case, it is desirable that the first sensor output value A and the second sensor output value B be detected under the same measuring environment.

In the above-mentioned embodiments, the crank position sensor 39 is used as a sensor whose change in output value corresponds to fuel injection amount. Even in the case where an output value from an air-fuel ratio sensor (A/F sensor) disposed in the exhaust passage, an output value from an acceleration sensor (G sensor or knock sensor) disposed in an engine block or the like of the engine body, an output value from a combustion pressure sensor installed in each of the cylinders, or the like is utilized, a minimum drive period can be calculated according to the above-mentioned processing routine.

A sensor for detecting an operational state, such as a pressure sensor, an accelerator opening sensor, or the like may also be employed.

As is common to the above-mentioned sensors, these sensors have such characteristics that an output value from each of them changes in accordance with fuel injection amount. That is, in the case of an air-fuel ratio sensor, air-fuel ratio of exhaust gas (oxygen concentration) changes in accordance with fuel injection amount. Thus, if a change in air-fuel ratio of this exhaust gas is detected, a change in output value corresponding to a fuel injection amount can be obtained. In the case of an acceleration sensor, the magnitude of rocking movements of the engine body changes in accordance with fuel injection amount. Thus, a change in output value corresponding to a fuel injection amount can be obtained by detecting a magnitude of rocking movements of the engine body. In the case of a fuel pressure sensor, combustion pressure in each of the cylinders changes as well in accordance with fuel injection amount. Thus, a change in output value corresponding to fuel injection amount can be obtained by detecting a change in combustion pressure.

That is, it is desirable that a sensor that outputs value one of a combustion pressure, an amount of change in engine speed, an exhaust gas state, and kinetic energy of the engine body as a sensor output value be used in calculating a minimum drive period.

In the above-mentioned embodiments, when reading the first and second sensor output values, the interval at which these values are detected is not determined in particular. For example, however, in the case where a change in air-fuel ratio of exhaust gas is detected as a sensor output value, for a while after detection of the first sensor output value, the influence of fuel injection resulting from detection remains. Thus, the second sensor output value to be detected subsequently is detected in a period in which the influence of fuel injection on the first sensor output value can be regarded as having converged. That is, it is desirable that the second sensor output value be read in a period in which the influence of fuel injection control resulting from the reading of the first sensor output value can be regarded as having disappeared. In this case, changes in output value corresponding to a fuel injection amount at each moment can be precisely detected as to both the sensor output values.

Although the invention is applied to a diesel engine in the above-mentioned embodiments, the scope of application of the invention is obviously not limited to diesel engines. For example, the invention is also useful in gasoline engines capable of lean combustion and the like.

This is because of the following background. In a gasoline engine allowing lean combustion, a swirl of airflow is formed in the cylinders, and fuel injection is carried out by means of the fuel injection valves 2 at a suitable timing during generation of the airflow. That is, in a gasoline engine allowing lean combustion. a minimum drive period for the fuel injection valves 2 needs to be accurately grasped so as to obtain the most suitable mixture that is required at each moment. In this respect, the invention attempts to make fuel injection control appropriate by means of minimum drive period calculation control and fuel injection correction control. Thus, the invention can be regarded as an effective means in obtaining the most suitable mixture in a gasoline engine allowing lean combustion.

Although the electromagnetically driven fuel injection valves 2 are adopted as an example in the above-mentioned embodiments, the invention is obviously applicable to fuel injection nozzles driven by piezoelectric elements (piezoelectric fuel injection valves) and the like as well.

A drive period of piezoelectric fuel injection valves means an interval between a charge period and a discharge period of a piezoelectric actuator, in other words, it is a charge holding period of the piezoelectric actuator.

As described above, the invention makes it possible to provide an art for precisely detecting a minimum drive period for fuel injection valves in a fuel injection device of an internal combustion engine within a short period, and an art for precisely correcting fuel injection control in accordance with a minimum drive period that has been detected.

The invention is applicable regardless of the number of cylinders, the type or use of an internal combustion engine, or the like.

**Claims**

1. A fuel injection control device for an internal combustion engine (1) that causes fuel injection valves (2), which are driven by a control signal, in which a drive period, which is.more than a minimum drive period, is required necessarily to actually start the fuel injection by the control signal, and which inject fuel whose amount corresponds to a drive period of the fuel injection valves (2), to carry out fuel injection for learning injection characteristics of the fuel injection valves (2), **characterized by** comprising:

a sensor whose output value changes in accordance with an amount of fuel injected from the fuel injection valves (2);
storage means (32,33,50) that stores, as a reference change in output value, a change ($\Delta$S) in an output value of the sensor, which corresponds to a predetermined injection amount (Qst);
injection condition setting means (S206) that acquires an output value (S0) of the sensor by setting the drive period as a non-injection period ($\tau$0) that is shorter than a minimum drive period prior to the actual start of injection, and that acquires output values (Sa, Sb) of the sensor by setting the drive period as a plurality of injection periods ($\tau a$, $\tau b$) that are longer than the minimum drive period and that are different in length, during fuel injection for learning the injection characteristics;

sensor output value estimation means (S206) that estimates a sensor output value (S) in the case where fuel injection amount is equal to the predetermined injection amount (Qst) on the basis of an output value (S0) of the sensor in the case where drive period is within the non-injection period and on the basis of the reference change ($\Delta S$) in output value;

characteristic curve estimation means (S208) that estimates a characteristic curve indicating a relationship between sensor output value and drive period in an injection period on the basis of output values of the sensor corresponding to the injection periods; and

correction means (S302) that corrects the drive period such that the sensor output value (S) estimated by the sensor output value estimation means (30) corresponds to a drive period ($\tau c$) at the time when the predetermined injection amount (Qst) is required on the characteristic curve indicating the relationship between sensor output value and drive period.

2. The fuel injection control device for the internal combustion engine (1) according to claim 1, **characterized in**

   **that** the correction means (S302) calculates a drive period ($\tau c$) corresponding to the estimated sensor output value (S) on the characteristic curve indicating the relationship between sensor output value and drive period and performs off-set correction of the drive period in such a manner as to counterbalance changes in the calculated period ($\tau c$).

3. The fuel injection control device for the internal combustion engine (1) according to claim 2, **characterized in**

   **that** the correction means (S302) is designed to correct the drive period of the fuel injection valves (2) in accordance with a pre-correction drive period in such a manner as to counterbalance changes in gradient of the characteristic curve indicating the relationship between sensor output value and drive period.

4. The fuel injection control device for the internal combustion engine (1) according to any one of claims 1 to 3, **characterized by** comprising:

   operational state detection means (S202) that detects an operational state of the internal combustion engine (1); and

learning-purpose fuel injection prohibition means (S203) that prohibits fuel injection for learning the injection characteristics if the operational state detected by the operational state detection means (S202) is not a preset operational state.

5. The fuel injection control device according to any one of claims 1 to 4, **characterized in**

   **that** the sensor is a cylinder internal pressure sensor (40) that detects pressures in the cylinders of the internal combustion engine (1).

6. The fuel injection control device according to any one of claims 1 to 4, **characterized in**

   **that** the sensor is a knock sensor (39) that detects knocking of the internal combustion engine (1).

7. A fuel injection control device for an internal combustion engine (1) comprising fuel injection valves (2) that requires a drive period which is more than a minimum drive period, and necessarily to actually start the fuel injection, a sensor whose output value changes in accordance with an amount of fuel injected from the fuel injection valves (2), and minimum drive period calculation means (30) that calculates a minimum drive period of the fuel injection valves (2) that is required until the fuel injection from the fuel injection valves (2) is started on the basis of a change in output value from the sensor, **characterized in**

   **that** the minimum drive period calculation means (30) sets an output value (S0) of the sensor (39) corresponding to a value at the time when no fuel is injected as a threshold for calculating the minimum drive period, derives an approximation formula by interpolating at least first and second sensor output values (Sa, Sb) that have been detected under conditions with mutually different fuel injection amounts, and calculates the minimum drive period on the basis of the threshold (S0) and the approximation formula in calculating the minimum drive period.

8. The fuel injection control device according to claim 7, **characterized in**

   **that** the minimum drive period calculation means (30) actually measures the sensor output value (S0) corresponding to a value at the time when no fuel is injected and sets the sensor output value (S0) as a threshold (S0) for calculating the minimum drive period, under circumstances where the minimum drive period is to be calculated.

9. The fuel injection control device according to claim 7 or 8, **characterized in**

   **that** the sensor outputs value one of combustion pressure, amount of change in engine speed, exhaust gas state, and kinetic energy of an engine body as the sensor output value.

10. The fuel injection control device according to any one of claims 7 to 9, **characterized in**
    **that** the minimum drive period calculation means (30) monitors measuring environments of the sensor output value in the periods respectively in association with an operational state of the internal combustion engine (1) and detects the sensor output value in accordance with an individual condition for detecting each of sensor output values if the measuring environments coincide with each other.

11. The fuel injection control device according to any one of claims 7 to 10, **characterized in**
    **that** a second sensor output value, which is one of the sensor output values for the drive periods, is detected when the influence of fuel injection on a first sensor output value that has been detected prior to the second sensor output value can be regarded as having converged.

12. The fuel injection control device according to any one of claims 7 to 11, **characterized by** comprising:

    correction means (S302) that corrects a prescribed minimum drive period determined for the fuel injection control on the basis of the minimum drive period calculated by the minimum drive period calculation means (30) such that fuel injection is actually started in response to the start of the fuel injection control.

13. The fuel injection control device according to claim 12, **characterized in**
    **that**, in the case where the internal combustion engine (1) is a multi-cylinder internal combustion engine (1) and where each of the fuel injection valves is disposed in a corresponding one of cylinders, the minimum drive period calculation means (30) calculates the minimum drive period from the start of driving to the start of injection for each of the cylinders, and the correction means (S302) individually corrects fuel injection control corresponding to each of the cylinders on the basis of the minimum drive period calculated for each of the cylinders.

14. The fuel injection control device according to any one of claims 7 to 13, **characterized in**
    **that** the sensor is a crank position sensor that detects a rotational angle of a crank shaft of the internal combustion engine (1).

15. The fuel injection control device according to any one of claims 7 to 13, **characterized in**

**that** the sensor is an air-fuel ratio sensor (41) that is disposed in an exhaust passage of the internal combustion engine (1).

16. A method of controlling a fuel injection control device for an internal combustion engine (1) that causes fuel injection valves (2), which are driven by a control signal, in which a drive period, which is more than a minimum drive period, is required necessarily to actually start the fuel injection by the control signal, and which inject fuel whose amount corresponds to a drive period of the fuel injection valves (2), to carry out fuel injection for learning injection characteristics of the fuel injection valves (2), **characterized by** comprising:

    a storage step of storing, as a reference change in output value, a change ($\Delta S$) in an output value of the sensor, which corresponds to a predetermined injection amount (Qst);
    an injection condition setting step (S206) of setting the drive period as a non-injection period that can be regarded as shorter than a minimum drive period prior to the actual start of injection, setting the drive period as a plurality of injection periods that are different in length and that can be regarded as longer than the minimum drive period, and acquiring an output value of the sensor (39) as to each of the periods, during fuel injection for learning the injection characteristics;
    a characteristic curve estimation step (S208) of estimating a sensor output value (S) in the case where fuel injection amount is equal to the predetermined injection amount (Qst) on the basis of the sensor output value (S0) in the case where drive period is within the non-injection period and on the basis of the reference change ($\Delta S$) in output value, and estimating a characteristic curve indicating a relationship between sensor output value and drive period in an injection period on the basis of a sensor output value corresponding to each of the injection periods; and
    a correction step (S302) of correcting a drive period such that the sensor output value (S) estinated in the sensor output value estimation step (30) corresponds to a drive period ($\tau c$) at the time when the predetermined injection amount (Qst) is required on the characteristic curve indicating the relationship between sensor output value and drive period.

17. A method of controlling a fuel injection control device for an internal combustion engine (1) comprising fuel injection valves (2) that requires a drive period which is more than a minimum drive period, and necessarily to actually start the fuel injection, a sensor (39) whose output value changes in accordance with an amoun: of fuel injected from the fuel injection valves (2), and minimum drive period calculation step (30) that calculates a minimum drive period of the fuel injection valves (2) that is required until the fuel injection from the fuel injection valves (2) is started on the basis of a change in output value from the sensor (39), characteri :ed in

that the minimum drive period calculaticn step (30) sets an output value (S0) of the sensor (39) corresponding to a value at the time when no fuel is injected as a threshold for calculating the minimum drive period, derives an approximation formula by interpolating at least first and second sensor output values (Sa, Sb) that have been detected under conditions with mutually different fuel injection amounts, and calculates the minimum drive period on the basis of a threshold SO) and the approximation formula in calculating the minimum drive period.

## Patentansprüche

1. Kraftstoffeinspritzsteuervorrichtung für eine Brennkraftmaschine (1), die eine Kraftstoffeinspritzung für Lerneinspritzcharakteristika von Kraftstoffeinspritzventilen (2) bewirkt, die durch ein Steuersignal angetrieben werden, wobei eine Antriebsperiode, die größer ist als eine minimale Antriebsperiode, zum tatsächlichen Starten der Kraftstoffeinspritzung durch das Steuersignal erforderlich ist, und die Kraftstoff einspritzen, dessen Menge einer Antriebsperiode der Kraftstoffeinspritzventile (2) entspricht, **gekennzeichnet durch**:

   einen Sensor, dessen Abgabewert sich gemäß einer Kraftstoffmenge ändert, die von den Kraftstoffeinspritzventilen (2) eingespritzt wird; eine Speichereinrichtung (32, 33, 50), die als eine Referenzänderung eines Abgabewertes eine Änderung ($\Delta$S) eines Abgabewertes von dem Sensor speichert, der einer vorbestimmten Einspritzmenge (Qst) entspricht; eine Einspritzzustandsfestlegungseinrichtung (S206), die einen Abgabewert (S0) von dem Sensor **dadurch** gewinnt, dass die Antriebsperiode als eine Nicht-Einspritzperiode ($\tau$0) festgelegt wird, die kürzer als eine minimale Antriebsperiode vor dem tatsächlichen Start der Einspritzung ist, und die Abgabewerte (Sa, Sb) von dem Sensor **dadurch** gewinnt, dass die Antriebsperiode als eine Vielzahl Einspritzperioden ($\tau$a, $\tau$b) festgelegt wird, die länger sind als die minimale Antriebsperiode und die sich in der Länge unterscheiden, und zwar während einer Kraftstoffeinspritzung zum Lernen der Einspritzcharakteristika;

eine Sensorabgabenwertschätzeinrichtung (S206), die einen Sensorabgabewert (S) in jenem Fall schätzt, wenn eine Kraftstoffeinspritzmenge gleich der vorbestimmten Einspritzmenge (Qst) ist, und zwar auf der Grundlage eines Abgabewertes (S0) von dem Sensor in jenem Fall, wenn eine Antriebsperiode innerhalb der Nicht-Einspritzperiode ist, und auf der Grundlage der Referenzänderung ($\Delta$S) des Abgabewertes; eine Kurvencharakteristikschätzeinrichtung (S208), die eine charakteristische Kurve schätzt, welche eine Beziehung zwischen einem Sensorabgabewert und einer Antriebsperiode in einer Einspritzperiode angibt, auf der Grundlage von Abgabewerten von dem Sensor entsprechend den Einspritzperioden; und eine Korrektureinrichtung (S302), die die Antriebsperiode so korrigiert, dass der **durch** die Sensorabgabenwertschätzeinrichtung (30) geschätzte Sensorabgabenwert (S) einer Antriebsperiode ($\tau$c) zu jener Zeit entspricht, wenn die vorbestimmte Einspritzmenge (Qst) bei der charakteristischen Kurve erforderlich ist, die die Beziehung zwischen dem Sensorabgabenwert und der Antriebsperiode angibt.

2. Kraftstoffeinspritzsteuervorrichtung für die Brennkraftmaschine (1) gemäß Anspruch 1, **dadurch gekennzeichnet, dass**

   die Korrektureinrichtung (S302) eine Antriebsperiode ($\tau$c) entsprechend dem geschätzten Sensorabgabenwert (S) auf der charakteristischen Kurve berechnet, die die Beziehung zwischen dem Sensorabgabenwert und der Antriebsperiode angibt, und dass sie eine Versatzkorrektur der Antriebsperiode dergestalt durchführt, dass sich Änderungen der berechneten Periode ($\tau$c) ausgleichen.

3. Kraftstoffeinspritzsteuervorrichtung für die Brennkraftmaschine (1) gemäß Anspruch 2, **dadurch gekennzeichnet, dass**

   die Korrektureinrichtung (S302) so ausgelegt ist, dass sie die Antriebsperiode der Kraftstoffeinspritzventile (2) gemäß einer Vorkorrekturantriebsperiode derart korrigiert, dass sich Änderungen des Gradienten der charakteristischen Kurve ausgleichen, die die Beziehung zwischen dem Sensorabgabenwert und der Antriebsperiode angibt.

4. Kraftstoffeinspritzsteuervorrichtung für die Brennkraftmaschine (1) gemäß einem der Ansprüche 1 bis 3, **gekennzeichnet durch**:

   eine Betriebszustandserfassungseinrichtung (S202), die einen Betriebszustand der Brennkraftmaschine (1) erfasst; und

eine Lernkraftstoffeinspritzunterbindungseinrichtung (S203), die eine Kraftstoffeinspritzung zum Lernen der Einspritzcharakteristika unterbindet, falls der **durch** die Betriebszustandserfassungseinrichtung (S202) erfasste Betriebszustand kein voreingestellter Betriebszustand ist.

5. Kraftstoffeinspritzsteuervorrichtung gemäß einem der Ansprüche 1 bis 4, **dadurch gekennzeichnet, dass**
der Sensor ein Zylinderinnendrucksensor (40) ist, der Drücke in den Zylindern der Brennkraftmaschine (1) erfasst.

6. Kraftstoffeinspritzsteuervorrichtung gemäß einem der Ansprüche 1 bis 4, **dadurch gekennzeichnet, dass**
der Sensor ein Klopfsensor (39) ist, der ein Klopfen der Brennkraftmaschine (1) erfasst.

7. Kraftstoffeinspritzsteuervorrichtung für eine Brennkraftmaschine (1) mit Kraftstoffeinspritzventilen (2), die eine Antriebsperiode erfordern, die größer als eine minimale Antriebsperiode ist und die zum tatsächlichen Starten der Kraftstoffeinspritzung erforderlich ist, einem Sensor, dessen Abgabewert sich gemäß einer Kraftstoffmenge ändert, die von den Kraftstoffeinspritzventilen (2) eingespritzt wird, und einer Minimalantriebsperiodenrechnungseinrichtung (30), die eine minimale Antriebsperiode der Kraftstoffeinspritzventile (2) berechnet, die bis zum Start der Kraftstoffeinspritzung aus den Kraftstoffeinspritzventilen (2) erforderlich ist, und zwar auf der Grundlage einer Änderung eines Abgabewertes von dem Sensor, **dadurch gekennzeichnet, dass**
die Minimalantriebsperiodenberechnungseinrichtung (30) einen Abgabewert (S0) von dem Sensor (39) entsprechend einem Wert zu jener Zeit, wenn kein Kraftstoff eingespritzt wird, als einen Schwellwert zum Berechnen der minimalen Antriebsperiode festlegt, dass sie eine Näherungsformel durch Interpolieren von zumindest einem ersten und einem zweiten Sensorabgabewert (Sa, Sb) herleitet, die bei jenen Bedingungen mit jeweils unterschiedlichen Kraftstoffeinspritzmengen erfasst sind, und dass sie die minimale Antriebsperiode auf der Grundlage des Schwellwerts (S0) und der Näherungsformel beim Berechnen der minimalen Antriebsperiode berechnet.

8. Kraftstoffeinspritzsteuervorrichtung gemäß Anspruch 7, **dadurch gekennzeichnet, dass**
die Minimalantriebsperiodenberechnungseinrichtung (30) den Sensorabgabewert (S0) entsprechend einem Wert zu jener Zeit tatsächlich misst, wenn kein Kraftstoff eingespritzt wird, und dass sie den Sensorabgabewert (S0) als einen Schwellwert (S0) zum Berechnen der minimalen Antriebsperiode festlegt, und zwar bei jenen Umständen, wenn die minimale Antriebsperiode zu berechnen ist.

9. Kraftstoffeinspritzsteuervorrichtung gemäß Anspruch 7 oder 8, **dadurch gekennzeichnet, dass** der Sensor einen Wert eines Verbrennungsdruckes, eines Änderungsbetrags der Kraftmaschinendrehzahl, eines Abgaszustands oder einer kinetischen Energie eines Kraftmaschinenkörpers als den Sensorabgabewert abgibt.

10. Kraftstoffeinspritzsteuervorrichtung gemäß einem der Ansprüche 7 bis 9, **dadurch gekennzeichnet, dass**
die Minimalantriebsperiodenberechnungseinrichtung (30) Messumgebungen des Sensorabgabewertes jeweils in den Perioden überwacht, die jeweils mit einem Betriebszustand der Brennkraftmaschine (1) verknüpft sind, und dass sie den Sensorabgabewert gemäß einem individuellen Zustand zum Erfassen der jeweiligen Sensorabgabewerte erfasst, falls die Messumgebungen jeweils miteinander übereinstimmen.

11. Kraftstoffeinspritzsteuervorrichtung gemäß einem der Ansprüche 7 bis 10, **dadurch gekennzeichnet, dass**
ein zweiter Sensorabgabewert, der einer der Sensorabgabewerte für die Antriebsperioden ist, dann erfasst wird, wenn der Einfluss der Kraftstoffeinspritzung auf einen ersten Sensorabgabewert, der vor dem zweiten Sensorabgabewert erfasst wurde, als konvergiert betrachtet werden kann.

12. Kraftstoffeinspritzsteuervorrichtung gemäß einem der Ansprüche 7 bis 11, **gekennzeichnet durch**:
eine Korrektureinrichtung (S302), die eine vorgeschriebene minimale Antriebsperiode korrigiert, die für die Kraftstoffeinspritzsteuerung auf der Grundlage der minimalen Antriebsperiode bestimmt ist, welche **durch** die Minimalantriebsperiodenberechnungseinrichtung (30) berechnet wird, und zwar so, dass die Kraftstoffeinspritzung als Reaktion auf den Start der Kraftstoffeinspritzsteuerung tatsächlich gestartet wird.

13. Kraftstoffeinspritzsteuervorrichtung gemäß Anspruch 12, **dadurch gekennzeichnet, dass**
in jenem Fall, wenn die Brennkraftmaschine (1) eine Mehrzylinder-Brennkraftmaschine (1) ist und wobei jedes Kraftstoffeinspritzventil in einem entsprechenden Zylinder angeordnet ist, die Minimalantriebsperiodenberechnungseinrichtung (30) die minimale Antriebsperiode nach dem Start des Antriebs bis zu dem Start der Einspritzung für jeden Zylinder berechnet, und die Korrektureinrichtung (S302) die Kraftstoffeinspritzsteuerung entsprechend jedem Zylinder auf der Grundlage der minimalen Antriebsperiode individuell korrigiert, die für jeden Zylinder berechnet ist.

14. Kraftstoffeinspritzsteuervorrichtung gemäß einem der Ansprüche 7 bis 13, **dadurch gekennzeichnet, dass**

der Sensor ein Kurbelpositionssensor ist, der einen Drehwinkel einer Kurbelwelle der Brennkraftmaschine (1) erfasst.

15. Kraftstoffeinspritzsteuervorrichtung gemäß einem der Ansprüche 7 bis 13, **dadurch gekennzeichnet, dass**

der Sensor ein Luft/Kraftstoff-Verhältnissensor (41) ist, der in einem Abgaskanal der Brennkraftmaschine (1) angeordnet ist.

16. Verfahren zum Steuern einer Kraftstoffeinspritzsteuervorrichtung für eine Brennkraftmaschine (1), die eine Kraftstoffeinspritzung zum Lernen von Einspritzcharakteristika von Kraftstoffeinspritzventilen (2) bewirkt, die durch ein Steuersignal angetrieben werden, wobei eine Antriebsperiode, die größer als eine minimale Antriebsperiode ist, zum tatsächlichen Starten der Kraftstoffeinspritzung durch das Steuersignal erforderlich ist, und die Kraftstoff einspritzen, dessen Menge einer Antriebsperiode der Kraftstoffeinspritzventile (2) entspricht, **gekennzeichnet durch**:

einen Speicherschritt zum Speichern einer Änderung (ΔS) eines Abgabewertes von dem Sensor, der einer vorbestimmten Einspritzmenge (Qst) entspricht, als eine Referenzänderung des Abgabewertes;
einem Einspritzzustandfestlegungsschritt (S206) zum Festlegen der Antriebsperiode als eine Nicht-Einspritzperiode, die als kürzer als eine minimale Antriebsperiode vor dem tatsächlichen Start der Einspritzung betrachtet werden kann, zum Festlegen der Antriebsperiode als eine Vielzahl Einspritzperioden, die sich in der Länge unterscheiden und die als länger als die minimale Antriebsperiode betrachtet werden können, und zum Gewinnen eines Abgabewertes von dem Sensor (39) bezüglich jeder Periode während einer Kraftstoffeinspritzung zum Lernen der Einspritzcharakteristika; einen Kurvencharakteristikschätzschritt (S208) zum Schätzen eines Sensorabgabewertes (S) in jenem Fall, wenn die Kraftstoffeinspritzmenge gleich der vorbestimmten Einspritzmenge (Qst) ist, und zwar auf der Grundlage des Sensorabgabewertes (S0) in jenem Fall, wenn die Antriebsperiode innerhalb der Nicht-Einspritzperiode ist, und auf der Grundlage der Referenzänderung (ΔS) des Abgabewertes, und zum Schätzen einer charakteristischen Kurve, die eine Beziehung zwischen einem Sensorabgabewert und einer Antriebsperiode in einer Einspritzperiode angibt, auf der Grundlage eines Sensorabgabewertes entsprechend der jeweiligen Einspritzperiode; und
einen Korrekturschritt (S302) zum Korrigieren einer Antriebsperiode derart, dass der bei dem Sensorabgabewertschätzschritt (30) geschätzte Sensorabgabenwert (S) einer Antriebsperiode (τc) zu jener Zeit entspricht, wenn die vorbestimmte Einspritzmenge (Qst) bei der charakteristischen Kurve erforderlich ist, die die Beziehung zwischen dem Sensorabgabewert und der Antriebsperiode angibt.

17. Verfahren zum Steuern einer Kraftstoffeinspritzsteuervorrichtung für eine Brennkraftmaschine (1) mit Kraftstoffeinspritzventilen (2), die eine Antriebsperiode erfordern, die größer als eine minimale Antriebsperiode ist und die zum tatsächlichen Starten der Kraftstoffeinspritzung erforderlich ist, einem Sensor (39), dessen Abgabewert sich gemäß einer Kraftstoffmenge ändert, die von den Kraftstoffeinspritzventilen (2) eingespritzt wird, und einem Minimalantriebsperiodenberechnungsschritt (30), der eine minimale Antriebsperiode der Kraftstoffeinspritzventile (2) berechnet, die bis zu dem Start der Kraftstoffeinspritzung aus den Kraftstoffeinspritzventilen (2) erforderlich ist, und zwar auf der Grundlage einer Änderung eines Abgabewertes von dem Sensor (39), **dadurch gekennzeichnet, dass**

der Minimalantriebsperiodenberechnungsschritt (30) einen Abgabewert (S0) von dem Sensor (39) entsprechend einem Wert zu jener Zeit, wenn kein Kraftstoff eingespritzt wird, als einen Schwellwert zum Berechnen der minimalen Antriebsperiode festlegt, dass er eine Näherungsformel durch Interpolieren von zumindest einem ersten und einem zweiten Sensorabgabewert (Sa, Sb) herleitet, die unter Bedingungen bei voneinander unterschiedlichen Kraftstoffeinspritzmengen erfasst wurden, und dass er die minimale Antriebsperiode auf der Grundlage eines Schwellwertes (S0) und der Näherungsformel beim Berechnen der minimalen Antriebsperiode berechnet.

## Revendications

1. Dispositif de commande d'injection de carburant pour moteur à combustion interne (1) amenant des soupapes d'injection de carburant (2), qui sont pilotées par un signal de commande, dans lesquelles une durée de commande, plus longue qu'une durée de commande minimale, est indispensable pour lancer effectivement l'injection de carburant à l'aide du signal de commande, et qui injectent le carburant dont la quantité correspond à une durée de commande des soupapes d'injection de carburant (2), à exécuter l'injection de carburant pour l'apprentissage des caractéristiques d'injection des soupapes d'injection de carburant (2), **caractérisé en ce qu'**il comprend

un capteur dont la valeur de sortie varie en fonction de la quantité de carburant injecté des soupapes d'injection de carburant (2) ;

un moyen de mémorisation (32, 33, 50) qui mémorise, en tant que variation de référence de la valeur de sortie, une variation ($\Delta S$) de la valeur de sortie du capteur, qui correspond à une quantité d'injection prédéfinie (Qst) ;

un moyen de réglage de condition d'injection (S206) qui acquiert une valeur de sortie (S0) du capteur en réglant la durée de commande comme étant une période sans injection ($\tau 0$) qui est plus courte qu'une durée de commande minimale avant le début effectif de l'injection, et qui acquiert des valeurs de sortie (Sa, Sb) du capteur en réglant la durée de commande comme étant une pluralité de durées d'injection ($\tau a$, $\tau b$) qui sont plus longues que la durée de commande minimale et qui ont des longueurs différentes, pendant l'injection de carburant pour l'apprentissage des caractéristiques d'injection ;

un moyen d'évaluation de valeurs de sortie de capteur (S206) qui évalue une valeur de sortie de capteur (S) lorsque la quantité d'injection de carburant est égale à la quantité d'injection prédéfinie (Qst) en fonction d'une valeur de sortie (S0) du capteur si la durée de commande se trouve dans la période sans injection et en fonction de la variation de référence ($\Delta S$) de valeur de sortie ;

un moyen d'évaluation de courbes caractéristiques (S208) qui évalue une courbe caractéristique indiquant une relation entre valeur de sortie de capteur et durée de commande dans une durée d'injection en fonction de valeurs de sortie du capteur correspondant aux durées d'injection ; et

un moyen de correction (S302) qui corrige la durée de commande de sorte que la valeur de sortie de capteur (S) évaluée par le moyen d'évaluation de valeurs de sortie de capteur (30) corresponde à une durée de commande ($\tau c$) lorsque la quantité d'injection prédéfinie (Qst) est exigée sur la courbe caractéristique indiquant la relation entre valeur de sortie de capteur et durée de commande.

2. Le dispositif de commande d'injection de carburant pour moteur à combustion interne (1) selon la revendication 1, **caractérisé en ce que** le moyen de correction (S302) calcule une durée de commande ($\tau c$) correspondant à la valeur estimée de sortie de capteur (S) sur la courbe caractéristique indiquant la relation entre valeur de sortie de capteur et durée de commande et exécute une correction de compensation de la durée de commande de manière à contrebalancer les variations de la durée calculée ($\tau c$).

3. Le dispositif de commande d'injection de carburant pour moteur à combustion interne (2) selon la revendication 1, **caractérisé en ce que** le moyen de correction (S302) est calculé pour corriger la durée de commande des soupapes d'injection de carburant (2) en fonction d'une durée de commande de pré-correction de manière à contrebalancer les variations de gradient de la courbe caractéristique indiquant la relation entre valeur de sortie de capteur et durée de commande.

4. Le dispositif de commande d'injection de carburant pour moteur à combustion interne (1) selon l'une quelconque des revendications 1 à 3, **caractérisé en ce qu'**il comprend :

un moyen de détection d'états opérationnels (S202) qui détecte un état opérationnel du moteur à combustion interne (1) ; et
un moyen d'interdiction d'injection de carburant pour apprentissage (S203) qui interdit l'injection de carburant pour l'apprentissage des caractéristiques d'injection si l'état opérationnel détecté par le moyen de détection d'états opérationnels (S302) n'est pas un état opérationnel prédéfini.

5. Le dispositif de commande d'injection de carburant selon l'une quelconque des revendications 1 à 4, **caractérisé en ce que** le capteur est un capteur de pressions internes de cylindres (40) qui détecte les pressions dans les cylindres du moteur à combustion interne (1).

6. Le dispositif de commande d'injection de carburant selon l'une quelconque des revendications 1 à 4, **caractérisé en ce que** le capteur est un capteur de détonation (39) qui détecte la détonation du moteur de combustion interne (1).

7. Dispositif de commande d'injection de carburant pour moteur à combustion interne (1) comprenant des soupapes d'injection de carburant (2) qui nécessitent une durée de commande plus longue qu'une durée de commande minimale et, nécessairement pour lancer effectivement l'injection de carburant, un capteur dont la valeur de sortie varie en fonction de la quantité de carburant injecté depuis les soupapes d'injection de carburant (2), et un moyen de calcul de durées de commande minimales (30) qui calcule une durée de commande minimale des soupapes d'injection de carburant (2) qui est requise jusqu'à ce que l'injection de carburant depuis les soupapes d'injection de carburant (2) soit lancée en s'appuyant sur une variation de valeur de sortie délivrée par le capteur, **caractérisé en ce que** le moyen de calcul de durées de commande minimales (30) règle, comme valeur de seuil pour le calcul de la durée de commande minimale, une valeur de sortie (S0) du capteur (39) correspondant à une valeur au moment où aucun carburant n'est injecté, obtient une formule d'approximation en interpolant au moins des première et seconde valeurs de sorties de capteur (Sa, Sb) qui ont été détectées dans des conditions avec des quantités mutuellement différentes d'injection de carburant, et calcule la durée de commande minimale en fonction de la valeur de seuil (S0) et de la formule d'approximation pour calculer la durée de commande minimale.

8. Le dispositif de commande d'injection de carburant selon la revendication 7, **caractérisé en ce que** le moyen de calcul de durées de commande minimales (30) mesure effectivement la valeur de sortie de capteur (S0) correspondant à une valeur au moment où aucun carburant n'est injecté et règle la valeur de sortie de capteur (S0) comme valeur de seuil (S0) pour le calcul de la durée de commande minimale, dans des circonstances où la durée de commande minimale doit être calculée.

9. Le dispositif de commande d'injection de carburant selon la revendication 7 ou 8, **caractérisé en ce que** le capteur délivre comme valeur de sortie de capteur une valeur parmi la pression de combustion, la quantité de variation de vitesse de moteur, l'état du gaz d'échappement et l'énergie cinétique d'un corps de moteur.

10. Le dispositif de commande d'injection de carburant selon l'une quelconque des revendications 7 à 9, **caractérisé en ce que** le moyen de calcul de durées de commande minimales (30) surveille les environnements de mesurage de la valeur de sortie de capteur dans les durées respectivement en association avec l'état opérationnel du moteur à combustion interne (1) et détecte la valeur de sortie de capteur en fonction d'une condition individuelle pour détecter chacune des valeurs de sortie de capteur si les environnements de mesurage coincident les uns avec les autres.

11. Le dispositif de commande d'injection de carburant selon l'une quelconque des revendications 7 à 10, **caractérisé en ce qu'**une seconde valeur de sortie de capteur, qui est l'une des valeurs de sortie de capteur pour les durées de commande, est détectée lorsque l'influence de l'injection de carburant sur la première valeur de sortie de capteur qui a été détectée avant la seconde valeur de sortie de capteur a été considérée comme ayant convergé.

12. Le dispositif de commande d'injection de carburant selon l'une quelconque des revendications 7 à 11, **caractérisé en ce qu'**il comprend :

un moyen de correction (S302) qui corrige une durée minimale de commande prescrite, déterminée pour la commande d'injection de carburant, en fonction de la durée de commande minimale calculée par le moyen de calcul de durées de commande minimales (30) de sorte que l'injection de carburant soit effectivement lancée en réponse au début de la commande d'injection de carburant.

13. Le dispositif de commande d'injection de carburant selon la revendication 12, **caractérisé en ce que**, si le moteur à combustion interne (1) est un moteur à combustion interne à plusieurs cylindres (1) alors que chacune des soupapes d'injection de commande est placée dans celui des cylindres qui correspond, le moyen de calcul de durées de commande minimales (30) calcule la durée de commande minimale depuis le début de la commande jusqu'au début de l'injection pour chacun des cylindres, et le moyen de correction (S302) corrige individuellement la commande d'injection de carburant correspondant à chacun des cylindres en fonction de la durée de commande minimale calculée pour chacun des cylindres.

14. Le dispositif de commande d'injection de carburant selon l'une quelconque des revendications 7 à 13, **caractérisé en ce que** le capteur est un capteur de position de vilebrequin qui détecte l'angle de rotation d'un vilebrequin du moteur à combustion interne (1).

15. Le dispositif de commande d'injection de carburant selon l'une quelconque des revendications 7 à 13, **caractérisé en ce que** le capteur est un capteur de rapport air-carburant (41) qui est placé dans un passage d'échappement du moteur à combustion interne (1).

16. Méthode de commande d'un dispositif de commande d'injection de carburant pour moteur à combustion interne (1) qui amène des soupapes d'injection de carburant (2), qui sont pilotées par un signal de commande, dans lesquelles une durée de commande, plus longue qu'une durée de commande minimale, est indispensable pour lancer effectivement l'injection de carburant à l'aide du signal de commande, et qui injectent le carburant dont la quantité correspond à une durée de commande des soupapes d'injection de carburant (2), à exécuter l'injection de carburant pour l'apprentissage des caractéristiques d'injection des soupapes d'injection de carburant (2), **caractérisée en ce qu'**elle comprend :

une étape de mémorisation pour mémoriser, en tant que variation de référence de la valeur de sortie, une variation (ΔS) de la valeur de sortie du capteur, qui correspond à une quantité d'injection prédéfinie (Qst) ;

une étapes de réglage de conditions d'injection (S206) pour régler la durée de commande comme étant une période sans injection qui peut être considérée plus courte qu'une durée de commande minimale avant le début effectif de l'injection, régler la durée de commande comme étant une pluralité de durées d'injection ayant des longueurs différentes et qui peut être considérée plus longue que la durée de commande minimale, et acquérir une valeur de sortie du capteur (39) pour chacune des durées, pendant l'injection de carburant pour l'apprentissage des caractéristiques d'injection ;

une étape d'évaluation de courbes caractéristiques (S208) pour évaluer une valeur de sortie de capteur (S) lorsque la quantité d'injection de carburant est égale à une quantité d'injection prédéfinie (Qst) en fonction de la valeur de sortie de capteur (S0) lorsque la durée de commande se trouve dans la période sans injection et en fonction de la variation de référence (ΔS) de valeur de sortie, et évaluer une courbe caractéristique indiquant une relation entre valeur de sortie de capteur et durée de commande dans une durée d'injection en fonction d'une valeur de sortie de capteur correspondant à chacune des durées d'injection ;

une étape de correction (S302) pour corriger la durée de commande de sorte que la valeur de sortie de capteur (S) évaluée dans l'étape d'évaluation de valeurs de sortie de capteur (30) corresponde à la durée de commande (τc) lorsque la quantité d'injection prédéfinie (Qst) est exigée sur la courbe caractéristique indiquant la relation entre valeur de sortie de capteur et durée de commande.

17. Méthode de commande d'un dispositif de commande d'injection de carburant pour moteur à combustion interne (1) comprenant des soupapes d'injection de carburant (2) qui nécessitent une durée de commande plus longue qu'une durée de commande minimale et, nécessairement pour lancer effectivement l'injection de carburant, un capteur (39) dont la valeur de sortie varie en fonction de la quantité de carburant injecté des soupapes d'injection de carburant (2), et une étape de calcul de durées de commande minimales (30) qui calcule une durée de commande minimale des soupapes d'injection de carburant (2) qui est requise jusqu'à ce que l'injection de carburant depuis les soupapes d'injection de carburant (2) soit lancée en s'appuyant sur une variation de valeur de sortie délivrée par le capteur (39), **caractérisée en ce**

**que** l'étape de calcul de durées de commande minimales (30) règle, comme valeur de seuil pour le calcul de la durée de commande minimale, une valeur de sortie (S0) du capteur (39) correspondant à une valeur au moment où aucun carburant n'est injecté, obtient une formule d'approximation en interpolant au moins des première et seconde valeurs de sorties de capteur (Sa, Sb) qui ont été détectées dans des conditions avec des quantités mutuellement différentes d'injection de carburant, et calcule la durée de commande minimale en fonction de la valeur de seuil (S0) et de la formule d'approximation pour calculer la durée de commande minimale.

EP 1 350 941 B1

FIG. 1

22

# FIG.2A

START

S101 —— NON-INJECTION CONTROL STATE ? —— NO

YES

S102 —— DETECT MEASURING ENVIRONMENT

S103 —— HAS SENSOR OUTPUT VALUE STABILZED ? (HAS SENSOR OUTPUT VALUE RETURNED TO ZERO POINT ?)

NO

YES

S104 —— SET NUMBER ASSIGNED TO CYLINDER

S105 —— ACQUIRE SENSOR OUTPUT VALUE AT THE TIME WHEN NO FUEL IS INJECTED

S106 —— MAKE MEASURING ENVIRONMENTS OF FIRST AND SECOND SENSOR OUTPUT VALUES COINCIDENT WITH EACH OTHER

Ⓐ            Ⓑ            Ⓒ

# F I G . 2B

(A)    (B)    (C)

**S107** — PERFORM FUEL INJECTION CONTROL WITH DIFFERENT ENERGIZATION PERIODS

**S108** — ACQUIRE FIRST AND SECOND SENSOR OUTPUT VALUES

**S109** — DERIVE APPROXIMATION FORMULA ON THE BASIS OF INTERPOLATIVE PROCESSING

**S110** — CALCULATE MINIMUM DRIVE PERIOD

**S111** — CALCULATE DIFFERENCE BETWEEN PRESCRIBED MINIMUM DRIVE PERIOD AND CALCULATED MINIMUM DRIVE PERIOD

**S112** — CORRECT PRESCRIBED MINIMUM DRIVE PERIOD

**S113** — CORRECT TIMING WHEN FUEL INJECTION CONTROL IS STARTED

END

EP 1 350 941 B1

# F I G . 3

# F I G . 4

# FIG.5A

START LEARNING PROCESSING

S201 — MAKE DETERMINATION ON FUEL INJCTION CUT DURING DECELERATION ? — NO

YES

S202 — MAKE DETERMINATION ON ENGINE SPEED AND INJECTION PRESSURE ? — NO

YES

S203 — DETERMINE WHETHER OR NOT SENSOR OUTPUT HAS RETURNED TO ZERO POINT ? — NO

YES

S204 — SET NUMBER OF CYLINDER TO WHICH FUEL IS TO BE INJECTED

S205 — SET DRIVE PERIOD FOR FUEL INJECTION VALVES

S206 — STORE DRIVE PERIOD & SENSOR OUTPUT

(A)

(B)

EP 1 350 941 B1

# F I G . 5B

Ⓐ                                              Ⓑ

S207 — HAS
ACQUISITION OF
DATA FOR INTERPOLATIVE
CALCULATION
BEEN COMPLETED
?

NO →

↓ YES

S208 — CALCULATE DRIVE
PERIOD CORRESPONDING TO
PREDETERMINED INJECTION
AMOUNT THROUGH
INTERPOLATION

S209 — CALCULATE DEVIATION OF
DRIVE PERIOD
CORRESPONDING TO
PREDETERMINED INJECTION
AMOUNT FROM
CONTROL VALUE

S210 — RETAIN DEVIATION FROM
CONTROL VALUE AND NUMBER
ASSINGNED TO CYLINDER IN
NON-VOLATILE MEMORY

RETURN

27

# FIG.6

START CORRECTION PROCESSING

↓

S301 — READ OUT DEVIATION FROM CONTROL VALUE AND NUMBER ASSIGNED TO CYLINDER FROM NON-VOLATILE MEMORY

↓

S302 — CORRECT CONTROL VALUE (FOR EACH OF CYLINDERS)

↓

END

# F I G . 7

CHANGE IN SENSOR OUTPUT
(PREDETERMINED VALUE)
CORRESPONDING TO PREDETERMINED
INJECTION AMOUNT
$\Delta S$

CHANGE IN SENSOR OUTPUT
CORRESPONDING TO $\tau b$
$\Delta Sb$

CHANGE IN SENSOR OUTPUT
CORRESPONDING TO $\tau a$
$\Delta Sa$

Sb

SENSOR
OUTPUT    S

Sa

SENSOR
OUTPUT AT
THE TIME
WHEN NO    S0
FUEL IS
INJECTED

$\bigcirc$ : MEASURING
POINT

DRIVE PERIOD $\tau 0$
IN WHICH NO FUEL
IS INJECTED AT ALL

$\tau a \quad \tau c \quad \tau b$

FUEL INJECTION VALVE
DRIVE PERIOD $\tau$

# F I G . 8A

CONTROL VALUE
(BEFORE CORRECTION)

INJECTION
AMOUNT Q

Qst

DEVIATION FROM
CONTROL VALUE
$\Delta \tau c$

DRIVE PERIOD
$\tau c$ CORRESPONDING
TO PREDETERMINED
INJECTION AMOUNT Qst
(CALCULATED VALUE)

FUEL INJECTION VALVE
DRIVE PERIOD $\tau$

# F I G . 8B

CONTROL VALUE
(AFTER CORRECTION)

INJECTION
AMOUNT Q

Qst

DRIVE PERIOD
$\tau c$ CORRESPONDING
TO PREDETERMINED
INJECTION AMOUNT Qst
(CALCULATED VALUE)

FUEL INJECTION VALVE
DRIVE PERIOD $\tau$

# FIG.9

CHANGE IN
SENSOR OUTPUT
CORRESPONDING TO $\tau b$
$\Delta Sb$

CHANGE $\Delta S$ IN
SENSOR OUTPUT
(PREDETERMINED VALUE)
CORRESPONDING TO
PREDETERMINED
INJECTION AMOUNT

CHANGE IN SENSOR OUTPUT
CORRESPONDING TO $\tau a$
$\Delta Sa$

SENSOR
OUTPUT    Sb

Sa

SENSOR
OUTPUT AT
THE TIME
WHEN NO     S0
FUEL IS
INJECTED

◯ : MEASURING
POINT

DRIVE PERIOD $\tau 0$
IN WHICH NO FUEL
IS INJECTED AT ALL

$\tau a$  $\tau b$  $\tau c$

FUEL INJECTION VALVE
DRIVE PERIOD $\tau$

31

# F I G . 10

CHANGE $\Delta$S IN SENSOR OUTPUT (PREDETERMINED VALUE) CORRESPONDING TO PREDETERMINED INJECTION AMOUNT

CHANGE $\Delta$Sk IN SENSOR OUTPUT CORRESPONDING TO $\tau k$ (CHANGES IN ACCORDANCE WITH CHANGE IN $\tau k$)

SENSOR OUTPUT

SENSOR OUTPUT AT THE TIME WHEN NO FUEL IS INJECTED

SN
S
S1
S0

$\bigcirc$ : MEASURING POINT

DRIVE PERIOD $\tau 0$ IN WHICH NO FUEL IS INJECTED AT ALL

$\tau 1 \quad \tau c \quad \tau N$

FUEL INJECTION VALVE DRIVE PERIOD $\tau$

32

# FIG. 11

SLOWING-DOWN OPERATION

FUEL CUT PERIOD

SPEEDING-UP OPERATION

INJECTION AMOUNT

B

A

0

TIME

# FIG. 12

Q

INJECTION AMOUNT (SENSOR OUTPUT)

MINIMUM DRIVE PERIOD

TRIAL

①②③④

CRITERION LEVEL

Q=0

START OF DRIVE

τ

UNIT : μs

Δτ

START OF INJECTION

NORMAL TIMING FOR STARTING INJECTION

EP 1 350 941 B1

# F I G . 13